# EUROPEAN PATENT SPECIFICATION

(11) **EP 3 173 969 B1**
(45) Date of publication and mention of the grant of the patent: **06.05.2020**
(21) Application number: 16169442.7
(22) Date of filing: 12.05.2016
(51) Int. Cl.: G06K 9/00

(54) **METHOD, APPARATUS AND TERMINAL DEVICE FOR PLAYING MUSIC BASED ON A TARGET FACE PHOTO ALBUM**
VERFAHREN, VORRICHTUNG UND ENDGERÄTEVORRICHTUNG ZUR WIEDERGABE VON MUSIK AUF BASIS EINES ZIELGESICHTSFOTOALBUMS
PROCÉDÉ, APPAREIL ET DISPOSITIF TERMINAL POUR JOUER DE LA MUSIQUE À PARTIR D'UN ALBUM PHOTO DE VISAGES CIBLES

(30) Priority: 26.11.2015 CN 201510845744
(43) Date of publication of application: 31.05.2017
(73) Proprietor: Xiaomi Inc., Beijing 100085 (CN)
(72) Inventor: CHEN, Zhijun, 100085 BEIJING (CN); HOU, Wendi, 100085 BEIJING (CN); LONG, Fei, 100085 BEIJING (CN)
(74) Representative: Cabinet Beau de Loménie

(56) References cited:
- EP-A1- 2 509 004
- CN-A- 104 268 150
- US-A1- 2009 116 684
- US-A1- 2015 206 523

## Description

### TECHNICAL FIELD

The present invention relates to the technical field of communication, in particular to a method, an apparatus and a terminal device for playing music based on a target face photo album.

### BACKGROUND

A user often uses a terminal device such as a mobile phone to take pictures and stores the photographed pictures in the terminal device. In order to conduct an effective sorting of a large amount of pictures photographed by the user, an application for making face photo albums has been provided in the prior art.

Making a face photo album, in brief, refers to performing face recognition to all pictures photographed by the user, putting pictures depicting a same human face, i.e., pictures of a same person, into a same photo album, thereby achieving sorted storage and management of the pictures according to human faces.

When the user watches pictures in a face photo album, in order to encourage a certain atmosphere, the user may want to play some music. For example, when the user is watching the face photo album of a baby, the user may select to play some music that is bright and of children interests to add an atmosphere. However, the selection of music is generally performed manually, that is to say, the user usually needs to manually choose and switch the played music when the user watches pictures in a plurality of face photo albums.

This solution is unsatisfactory.

CH104268150 discloses playing music based on image content.

US2009 116684 discloses choosing music based on the facial expression of a user.

### SUMMARY

The present invention provides a method, an apparatus and a terminal device for playing music based on a target face photo album, in which music is automatically chosen when the user is watching pictures in a face photo album, and in which the user experience is improved.

According to a first aspect of the embodiments, the invention relates to a method for playing music based on a target face photo album, comprising:
acquiring a watching instruction triggered by a user for watching pictures in the target face photo album;
acquiring features of the user;
determining a relationship between the user and a person being watched whose face is depicted in the target face photo album based on the features of the user;
determining a target music type corresponding to the relationship based on a preset correspondence relationship between each relationship of a plurality of relationship (e.g. father-son or husband-wife) and each music type of a plurality of music types (e.g. love songs);
playing the pictures in the target face photo album and playing music corresponding to the target music type.

A face photo album is a photo album comprising pictures containing a same human face, i.e., pictures of a same person this photo album being obtained by performing face recognition to all these pictures.

Playing pictures may be watching the pictures in the form of slides.

This technical solution may comprise the following advantageous effects: when the user needs to watch pictures in a certain face photo album, the relationship between the user and the facial image corresponding to the face photo album, i.e., the person being watched, can be determined based on the acquired features of the user, and thereby it is possible to achieve an automatic selecting and playing of music of a corresponding music type based on the relationship. When a certain face photo album is watched, the corresponding music can be automatically selected and played based on the relationship between the viewer and the person being watched, which decreases the complexity of the operations of the user, and thereby improves the user experience.

In a particular embodiment, acquiring features of the user comprises:
acquiring fingerprint information of the user;
and determining the relationship between the user and the person being watched whose face is depicted in the target face photo album based on the features of the user comprises:
   matching the fingerprint information with a preset fingerprint information of a first user;
   if the fingerprint information matches with the fingerprint information of the first user, determining the user as the first user, and determining the relationship between the first user and the person being watched whose face is depicted in the target face photo album based on a category tag set by the first user for the target face photo album;
   if the fingerprint information does not match with the fingerprint information of the first user, determining the user as a second user, and determining the relationship between the second user and the person being watched whose face is depicted in the target face photo album.

In a particular embodiment, determining the user as a second user and determining the relationship between the second user and the person being watched whose face is depicted in the target face photo album comprise:
acquiring a facial image of the second user;
matching the facial image of the second user with the facial image corresponding to each face photo album of a plurality of face photo albums;
if there is a face photo album that matches with the facial image of the second user, determining the relationship between the second user and the person being watched based on the category tag of the matched face photo album and the category tag of the target face photo album.

In a particular embodiment, acquiring features of the user comprises:
acquiring a facial image of the user;
and determining a relationship between the user and the person being watched whose face is depicted in the target face photo album based on the features of the user comprises:
   matching the facial image with a preset facial image of a first user;
   if the facial image matches with the facial image of the first user, determining the user as the first user, and determining the relationship between the first user and the person being watched whose face is depicted in the target face photo album based on a category tag set by the first user for the target face photo album;
   if the facial image does not match with the facial image of the first user, determining the user as the second user, and determining the relationship between the second user and the person being watched whose face is depicted in the target face photo album.

In a particular embodiment, determining the relationship between the second user and the person being watched whose face is depicted in the target face photo album comprises:
matching the facial image of the second user with the facial image corresponding to each face photo album of a plurality of face photo albums;
if there is a face photo album that matches with the facial image of the second user, determining the relationship between the second user and the person being watched based on the category tag of the matched face photo album and the category tag of the target face photo album.

In a particular embodiment, determining a relationship between the second user and the person being watched based on the category tag of the matched face photo album and the category tag of the target face photo album comprises:
determining the relationship between the first user and the second user based on the category tag of the matched face photo album;
determining the relationship between the second user and the person being watched based on the relationship between the first user and the person being watched and the relationship between the first user and the second user.

This technical solution may comprise the following advantageous effects: by acquiring features such as facial image and fingerprint of the viewer, an identity recognition is performed on the viewer, and when the viewer is not the creator of the face photo album, i.e., not the owner of the terminal device where the face photo album is located, by collecting the facial image of the viewer and matching it with the facial image corresponding to each face photo album of a plurality of face photo albums, when the viewer belongs to a certain face photo album, the relationship between the viewer and the person being watched can be obtained based on the category tag of the matched face photo album and the category tag of the target face photo album being watched, the owner of the terminal device being an intermediary person, and thereby an automatic selecting and playing of music based on the relationship is realized.

In a particular embodiment, the method further comprises:
if there is no face photo album that matches with the facial image of the second user, acquiring features of the second user;
determining the relationship between the second user and the person being watched based on the features and the relationship between the first user and the person being watched, the features comprising an age group information and/or a gender information.

This technical solution may comprise the following advantageous effects: if the viewer is not the owner of the terminal device, and the viewer does not belong to a certain face photo album stored in the terminal device, by extracting features of the facial image of the viewer, the relationship between the viewer and the person being watched can be obtained based on the extracted features and the relationship between the owner of the terminal device and the person being watched, the owner of the terminal device being an intermediary person, and thereby an automatic selecting and playing of music based on relationship is realized.

In a particular embodiment, the method further comprises:
sorting the pictures in the target face photo album in accordance with a chronological order of photographing or storage.

According to a second aspect of the embodiments, the invention relates to an apparatus for playing music based on a face photo album, comprising:
a first acquiring module configured to acquire a watching instruction triggered by a user for watching pictures in a target face photo album;
a second acquiring module configured to acquire features of the user;
a first determining module configured to determine a relationship between the user and a person being watched whose face is depicted in the target face photo album based on the features of the user;
a second determining module configured to determine a target music type corresponding to the relationship determined by the first determining module based on a preset correspondence relationship between each relationship of a plurality of relationship and each music type of a plurality of music types;
a playing module configured to play the pictures in the target face photo album and playing music corresponding to the target music type determined by the second determining module.

This technical solution may comprise the following advantageous effects: if the user needs to watch pictures in a face photo album, the relationship between the user and the facial image corresponding to the face photo album, i.e., the person being watched, can be determined based on the acquired features of the user, and thereby it is possible to achieve an automatic selecting and playing of music of a corresponding music type based on the relationship. When a certain face photo album is watched, the corresponding music can be automatically selected and played based on the relationship between the viewer and the person being watched, which decreases the complexity of the operations of the user and thereby improves the user experience.

In a particular embodiment, the second acquiring module comprises:
a first acquiring submodule configured to acquire fingerprint information of the user;
and the first determining module comprises:
   a first matching submodule configured to match the fingerprint information acquired by the first acquiring submodule with a preset fingerprint information of a first user;
   a first determining submodule configured to, if the fingerprint information matches with the fingerprint information of the first user, determine the user as the first user, and determine a relationship between the first user and the person being watched whose face is depicted in the target face photo album based on a category tag set by the first user for the target face photo album;
   a second determining submodule configured to, if the fingerprint information does not match with the fingerprint information of the first user, determine the user as a second user, and determine a relationship between the second user and the person being watched whose face is depicted in the target face photo album.

In a particular embodiment, the second determining submodule comprises:
a first acquiring unit configured to acquire a facial image of the second user;
a matching unit configured to match the facial image of the second user with the facial image corresponding to each face photo album of a plurality of face photo albums;
a first determining unit configured to, if there is a face photo album that matches with the facial image of the second user, determine the relationship between the second user and the person being watched based on the category tag of the matched face photo album and the category tag of the target face photo album.

In a particular embodiment, the second acquiring module comprises:
a second acquiring submodule configured to acquire a facial image of the user;
the first determining module comprises:
   a second matching submodule configured to match the facial image acquired by the second acquiring submodule with a preset facial image of the first user;
   the first determining submodule configured to, if the facial image matches with the facial image of the first user, determine the user as the first user, and determine the relationship between the first user and the person being watched whose face is depicted in the target face photo album based on a category tag set by the first user for the target face photo album;
   the second determining submodule configured to, if the facial image does not match with the facial image of the first user, determine the user as the second user, and determine the relationship between the second user and the person being watched whose face is depicted in the target face photo album.

In a particular embodiment, the second determining submodule comprises:
a matching unit configured to match the facial image of the second user with the facial image corresponding to each face photo album of a plurality of face photo albums;
a first determining unit configured to, if the matching unit matches the facial image of the second user to a face photo album, determine the relationship between the second user and the person being watched based on the category tag of the matched face photo album and the category tag of the target face photo album.

In a particular embodiment, the first determining unit comprises:
a first determining component configured to determine the relationship between the first user and the second user based on the category tag of the matched face photo album;
a second determining component configured to determine the relationship between the second user and the person being watched based on the relationship between the first user and the person being watched determined by the first determining submodule and the relationship between the first user and the second user determined by the first determining component.

This technical solution may comprise the following advantageous effects: by acquiring the features such as facial image and fingerprint of the viewer, an identity recognition is performed on the viewer, and when the viewer is not the creator of the face photo album, i.e., not the owner of the terminal device where the face photo album is located, by collecting the facial image of the viewer and matching it with the facial image corresponding to each face photo album of a plurality of face photo albums, when the viewer belongs to a certain face photo album, the relationship between the viewer and the person being watched can be obtained based on the category tag of the matched face photo album and the category tag of the target face photo album being watched, the owner of the terminal device being an intermediary person, and thereby an automatic selecting and playing of music based on the relationship is realized.

In a particular embodiment, the second determining submodule further comprises:
a second acquiring unit configured to, if the matching unit fails to match the facial image of the second user to a face photo album, acquire features of the second user;
a second determining unit configured to determine a relationship between the second user and the person being watched based on the features acquired by the second acquiring unit and the relationship between the first user and the person being watched determined by the first determining submodule, the features comprising an age group information and/or a gender information.

This technical solution may comprise the following advantageous effects: when the viewer is not the owner of the terminal device, and the viewer does not belong to a certain face photo album stored in the terminal device, by extracting features of the facial image of the viewer, the relationship between the viewer and the person being watched can be obtained based on the extracted features and the relationship between the owner of the terminal device and the person being watched, the owner of the terminal device being an intermediary person, and thereby an automatic selecting and playing of music based on relationship is realized.

In a particular embodiment, the apparatus further comprises:
a sorting module configured to sort the pictures in the target face photo album in accordance with a chronological order of photographing or storage.

According to a third aspect of the embodiments, the invention relates to a terminal device, comprising:
a processor;
a memory configured to store processor executable instructions;
wherein, the processor is configured to:
   acquire a watching instruction triggered by a user for watching pictures in a target face photo album;
   acquire features of the user;
   determine a relationship between the user and a person being watched whose face is depicted in the target face photo album based on the features of the user;
   determine a target music type corresponding to the relationship based on a preset correspondence relationship between each relationship of a plurality of relationship and each music type of a plurality of music types;
   play the pictures in the target face photo album and play music corresponding to the target music type.

In one particular embodiment, the steps of the method for playing music based on a face photo album are determined by computer program instructions.

Consequently, according to a fourth aspect of embodiments, the invention is also directed to a computer program for executing the steps of a method for playing music based on a face photo album as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are exemplary and explanatory only and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing embodiment one of a method for playing music based on a face photo album according to an exemplary embodiment;
Fig. 2 is a flowchart showing embodiment two of a method for playing music based on a face photo album according to an exemplary embodiment;
Fig. 3 is a flowchart showing embodiment three of a method for playing music based on a face photo album according to an exemplary embodiment;
Fig. 4 is a flowchart showing embodiment four of a method for playing music based on a face photo album according to an exemplary embodiment;
Fig. 5 is a block diagram showing embodiment one of an apparatus for playing music based on a face photo album according to an exemplary embodiment;
Fig. 6 is a block diagram showing embodiment two of an apparatus for playing music based on a face photo album according to an exemplary embodiment;
Fig. 7 is a block diagram showing embodiment three of an apparatus for playing music based on a face photo album according to an exemplary embodiment;
Fig. 8 is a block diagram showing embodiment four of an apparatus for playing music based on a face photo album according to an exemplary embodiment;
Fig. 9 is a block diagram showing a terminal device according to an exemplary embodiment;
Fig. 10 is a block diagram showing another terminal device according to an exemplary embodiment.

Through the above figures, the embodiments clarified in the present invention have been shown, and more detailed description will be given in the following. These figures and literal descriptions are not for restricting the scope of concept of the present invention by any means but for explaining the concept of the present invention to the persons skilled in the art by referring to certain embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

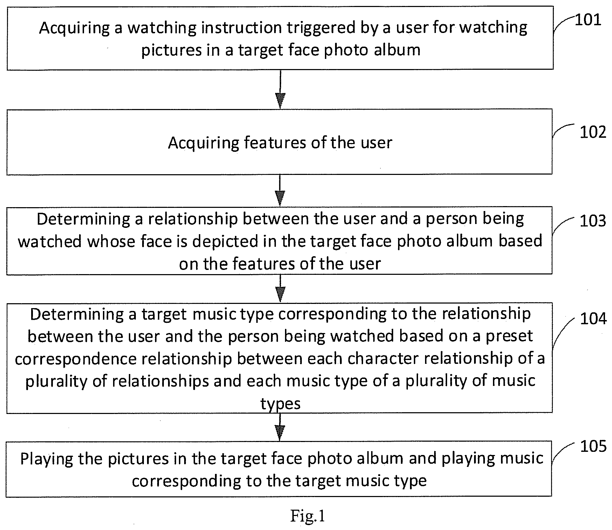

Fig. 1 is a flowchart showing embodiment one of a method for playing music based on a face photo album according to an exemplary embodiment. The method can be executed by an apparatus for playing music based on a face photo album, and said apparatus may be an application APP, and may also be a terminal device. As shown in Fig. 1, the method comprises the following steps:
step 101: acquiring a watching instruction triggered by a user for watching pictures in a target face photo album.
step 102: acquiring features of the user.
step 103: determining a relationship between the user and a person being watched whose face is depicted in the target face photo album based on the features of the user;
step 104: determining a target music type corresponding to the relationship between the user and the person being watched based on a preset correspondence relationship between each relationship of a plurality of relationship and each music type of a plurality of music types.
step 105: playing the pictures in the target face photo album and playing music corresponding to the target music type.

In this embodiment, the above user that watches the pictures in the target face photo album in a terminal device may be the owner of the terminal device, and may also not be the owner of the terminal device, for example, may be a relative of the owner. Therefore, when the terminal device acquires a watching instruction triggered by the user by clicking to watch the target face photo album, the terminal device triggers the acquisition of the features of the user.

For instance, the features of the user may be the features for recognizing the identity of the user, such as a facial image and a fingerprint, etc.. Based on the features, the identity of the user, i.e., the viewer, can be known.

Therefore, the relationship between the user and the person being watched whose face is depicted in the target face photo album can be determined based on the features of the user. For example, when the features of the user indicates that the user is the owner of the terminal device, or indicates that the user is not the owner of the terminal device, it can be roughly considered that when the user is the owner of the terminal device, the user belongs to an A type relationship with the person being watched, and when the user is not the owner of the terminal device, the user belongs to a B type relationship with the person being watched, respectively based on the relationship between the preset user identity (i.e., whether the user is the owner of the terminal device)and the person being watched.

Then, based on the preset music type corresponding to each relationship of a plurality of relationship, the target music type corresponding to the relationship between the current viewer and the person being watched is determined. While playing the pictures in the target face photo album, the music corresponding to the target music type is played.

In this embodiment, when the user needs to watch pictures in a certain face photo album, the relationship between the user and the facial image corresponding to the face photo album, i.e., the person being watched, can be determined based on the features of the user, and thereby it is possible to achieve an automatic selecting and playing of music of a corresponding music type based on the relationship. When a certain face photo album is watched, the corresponding music can be automatically selected and played based on the relationship between the viewer and the person being watched, which decreases the complexity of operations of the user, and thereby improves the user experience.

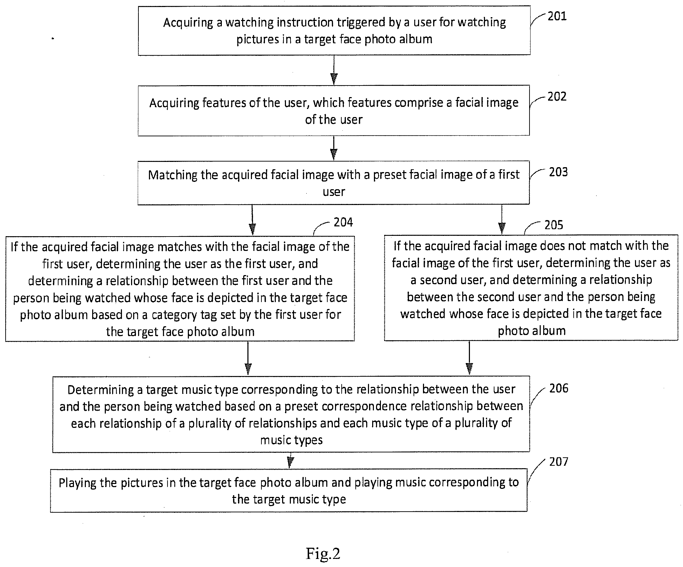

The foregoing embodiment has mentioned that the identity of the viewer can be determined based on the acquired features of the user. In the following, an example in which the features of the user is a facial image will be taken, in combination with the embodiment shown in Fig. 2, to explain how to determine the user identity and how to determine the relationship between the user and the person being watched based on the user identity.

Fig. 2 is a flowchart showing embodiment two of a method for playing music based on a face photo album according to an exemplary embodiment. As shown in Fig. 2, the method comprises:
step 201: acquiring a watching instruction triggered by a user for watching pictures in a target face photo album.
step 202: acquiring features of the user, which features comprise a facial image of the user.
step 203: matching the acquired facial image with a preset facial image of a first user.
step 204: if the acquired facial image matches with the facial image of the first user, determining the user as the first user, and determining a relationship between the first user and the person being watched whose face is depicted in the target face photo album based on a category tag set by the first user for the target face photo album;
step 205: if the acquired facial image does not match with the facial image of the first user, determining the user as a second user, and determining a relationship between the second user and the person being watched whose face is depicted in the target face photo album.
step 206: determining a target music type corresponding to the relationship between the user and the person being watched based on a preset correspondence relationship between each relationship of a plurality of relationship and each music type of a plurality of music types.
step 207: playing the pictures in the target face photo album and playing music corresponding to the target music type.

In this embodiment, the first user refers to the owner of the terminal device where a plurality of face photo albums comprising the above target face photo album are stored, i.e., the owner of the terminal device is the viewer, and, selecting a target face photo album intended to be watched from the plurality of face photo albums stored in the terminal device can trigger the transmitting of the above mentioned watching instruction to the terminal device.

Regarding the identity recognition process that whether the user is the first user, the facial image of the user can be photographed after the watching instruction triggered by the user is received, and thereby whether the user is the first user can be determined by performing feature matching to the facial image with the facial image of the first user which is pre-stored in the terminal device, and if the user is not the first user, the user is determined to be the second user.

During the process of matching the acquired facial image with the preset facial image of the first user, the feature points, such as the feature points of profile, eyes, nose, mouth and ears, etc., of each facial image can be extracted first. Then, a similarity measurement is performed on the feature points of the photographed facial image with the feature points of the facial image of the first user, and if the similarity is greater than a certain threshold, they are considered to be matched, and the user is determined to be the first user, otherwise, the user is considered to be the second user.

The above is a basis for distinguishing the first user and the second user by taking facial image as the features of the user. In an exemplary embodiment, fingerprint information of the user can also be taken as the features of the user as a basis for distinguishing the first user and the second user.

To be specific, when the user triggers a watching instruction, since the trigger action is likely to be done by clicking the target face photo album, the fingerprint information of the user can be collected based on the trigger action of the user. Then, the acquired fingerprint information is matched with the preset fingerprint information of the first user, and if the fingerprint information matches with the fingerprint information of the first user, the user is determined to be the first user, and the relationship between the first user and the person being watched whose face is depicted in the target face photo album is determined based on the category tag set by the first user for the target face photo album. If the fingerprint information does not match with the fingerprint information of the first user, the user is determined to be the second user, and the relationship between the second user and the person being watched whose face is depicted in the target face photo album is determined.

In this embodiment, detailed explanations will be given on how to determine the relationship between the first user and the person being watched when the user is the first user, and the determination of the relationship between the second user and the person being watched will be described in the subsequent embodiments in detail.

The terminal device has stored a plurality of face photo albums. When creating each of the face photo albums, the first user can set a category tag for each of the face photo albums, which tag can be the name of each of the face photo albums, such as baby, parents and wife and the like. Thus, the relationship such as father-son and husband-wife relationships between the first user and the person being watched corresponding to the face photo album can be determined based on the category tag.

Of course, the above is only a very simple and intuitional example, and in practical applications, the category tags may represent multidimensional classifications. For instance, first a coarse classification can be performed to all the face photo albums according to family, friends and colleagues, and then a more fine-grained classification is performed under each of the coarse classifications. For example, under the coarse classification of family, disaggregated classifications such as baby and parents are performed; and under the coarse classification of friends, disaggregated classifications distinguished by names such as Zhang San and Li Si are performed. As such, the category tag of each face photo album can consist of two main dimensions of coarse classification and disaggregated classification.

When the first user triggers the watching of pictures in a certain target face photo album, based on the category tag of the target face photo album, the relationship between the first user and the person being watched can be determined. For example, if the first user clicks to watch the face photo album with a category tag of family - son, for example a baby, it is possible to determine based on the category tag that the first user and the baby in the face photo album are in a parentage relationship.

In this embodiment, the correspondence relationship between each relationship of a plurality of relationship and each music type of a plurality of music types can be preset, for example, parentage relationship corresponds to a music type that is bright and of children interests, and love relationship corresponds to a music type of sweet love songs.

Thus, after the relationship between the first user and the person being watched is determined, based on the above preset correspondence relationship, the corresponding target music type is obtained by matching. In a case where each music type is only bound with one piece of music, the music can be directly played while the pictures in the target face photo album are played. Of course, in a case where each music type is bound with multiple pieces of music, the music can be selectively played in accordance with a preset playing mode, such as a random playing mode and a loop playing mode.

In this embodiment, in a case where the first user performs a sort of the pictures photographed by the user with face photo albums and set a category tag for each of the face photo albums, when the first user needs to watch pictures in a certain face photo album, the relationship between the first user and the facial image corresponding to the face photo album, i.e., the person being watched, can be determined based on the category tag, and thereby it is possible to realize an automatic selecting and playing of music of a corresponding music type based on the relationship. When a certain face photo album is watched, the corresponding music can be automatically selected and played based on the relationship between the viewer and the person being watched, which decreases the complexity of operations of the user and thereby improves the user experience.

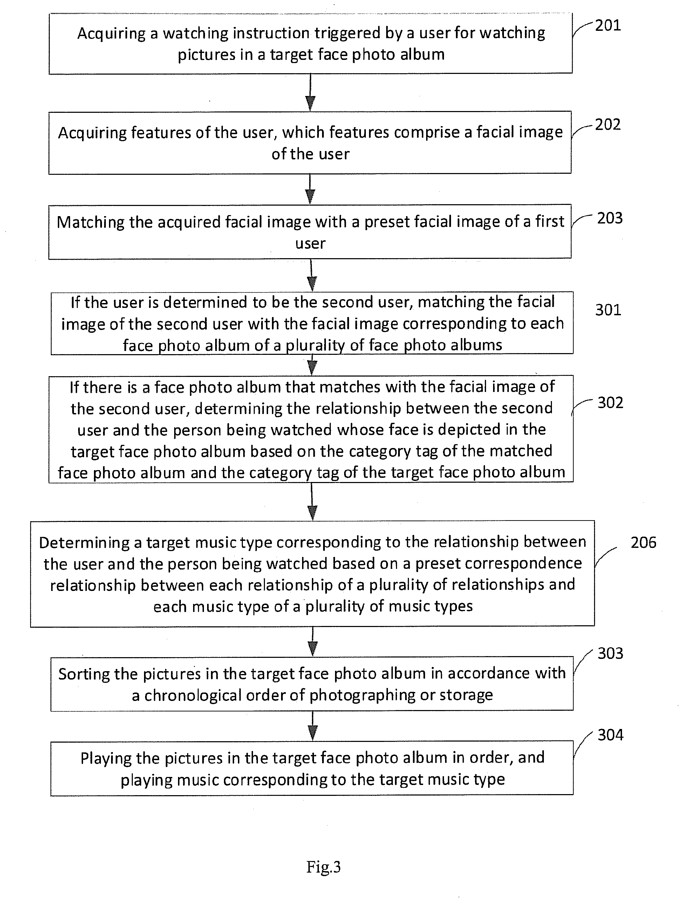

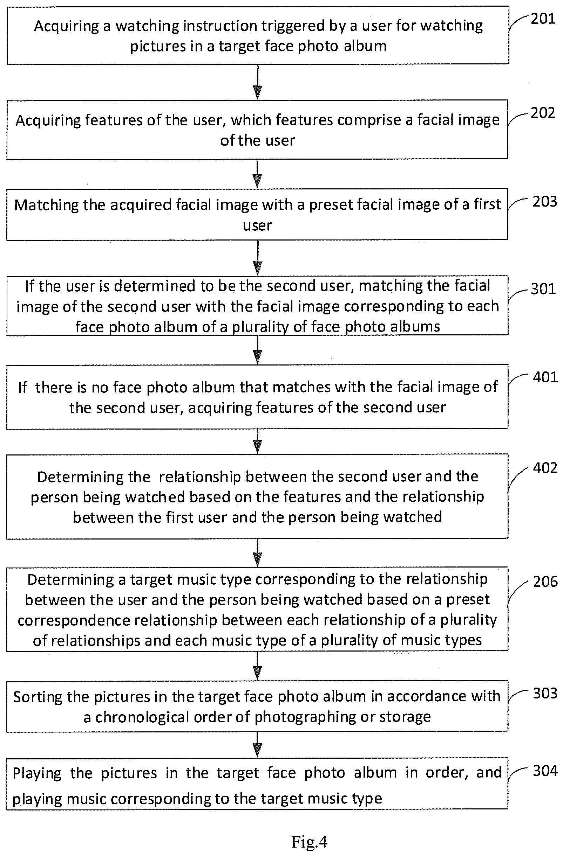

The above embodiment has mentioned that the first user is the owner of the terminal device where a plurality of face photo albums comprising the above target face photo album are stored, since the category tag of each face photo album is set by the first user based on the relationship between the first user and the person corresponding to each face photo album, therefore, the category tag can reflect the relationship between the first user and the person corresponding to each face photo album. However, if the viewer is not the first user, then the category tag cannot directly reflect the relationship between the viewer and the person being watched. Based on this situation, there is provided the embodiments shown in the following Fig. 3 and Fig. 4.

Before describing the embodiments shown in Fig. 3 and Fig. 4 in detail, the basis for distinguishing whether the viewer is the first user or the second user will first be explained.

The above embodiment has mentioned that recognition of whether the user is the first user or the second user can be performed based on the features of the user. Optionally, in practical applications, the following method can also be used to realize the distinguishing of the first user and the second user:
options can be set in the watching operation interface of the face photo album for the viewer, which include, for example, watching in person, others watching and watching in person together with others. Thus, if the viewer clicks to choose watching in person, it indicates that the user is the first user, if the viewer clicks to choose other watching, it indicates that the viewer is the second user, and if the viewer clicks to choose watching together, the viewers may include not only the first user but also the second user at the same time. Regarding the situation of watching together, it is processed in a similar manner with the situation of the second user watching, which will be explained in the following.

Fig. 3 is a flowchart showing embodiment three of a method for playing music based on a face photo album according to an exemplary embodiment. As shown in Fig. 3, determining the relationship between the second user and the person being watched in the pictures in the target face photo album in the above mentioned step 205 may be implemented by the following steps:
step 301: if the user is determined to be the second user, matching the facial image of the second user with the facial image corresponding to each face photo album of a plurality of face photo albums.
step 302: if there is a face photo album that matches with the facial image of the second user, determining the relationship between the second user and the person being watched corresponding to the target face photo album based on the category tag of the matched face photo album and the category tag of the target face photo album.

In this embodiment, when the viewer is not only the owner of the terminal device, i.e., the first user, but is the second user, the above mentioned facial image of the second user can be acquired during the process of recognizing the user identity by taking the facial image as the features of the user, however, during the process of recognizing the user identity by taking the fingerprint information as the features of the user, it can be acquired after the current user is determined to be the second user when the terminal device is triggered to photograph the facial image of the second user, such as to photograph using the front camera of the terminal device.

What is worth explaining is that in a case where viewers comprise a plurality of persons, i.e., corresponding to the above mentioned situation of watching together, the photographed picture contains a plurality of facial images, and a face recognition technology such as Adaboost technology can be used to perform the face recognition processing, so as to obtain each of the facial images.

Then, the acquired facial image of the second user is matched with the facial image corresponding to each face photo album of a plurality of face photo albums, i.e., a similarity measurement. During the matching process, feature points, such as the feature points of profile, eyes, nose, mouth and ears, etc., of each facial image can be extracted at first. Then, the similarity measurement is performed to the feature points of the photographed facial image with the feature points of the facial image corresponding to each face photo album of a plurality of face photo albums, and if the similarity is greater than a certain threshold, they are considered to be matched.

What is worth explaining is that the feature points of the facial image corresponding to each face photo album of a plurality of face photo albums can be pre-extracted and stored, and when there is a need to perform the above mentioned matching processing, it only requires extraction of the feature points of the photographed facial image in real time, and thereby the matching processing efficiency is improved.

When the facial image of the second user is matched to a certain face photo album, it indicates that the face photo album of the second user has also been stored in the terminal device of the first user. Therefore, the matched face photo album also has a category tag set by the first user. Thus the relationship between the second user and the person being watched can be determined in combination with the above category tag and the category tag of the target face photo album being watched.

To be specific, similar to determining the relationship between the first user and the person being watched, the relationship between the first user and the second user can be determined based on the category tag of the matched face photo album, and then, the relationship between the second user and the person being watched can be determined based on the relationship between the first user and the person being watched and the relationship between the first user and the second user.

For instance, assume that the viewer is B, and B is the second user, the first user is A, and the person being watched is C. We assume that the category tag set by the first user A for the target face photo album corresponding to the person being watched C is baby, then the relationship between the first user A and the person being watched C is a parentage relationship. We assume that by the facial image matching processing, the second user B corresponds to the face photo album with a tag of friend-Zhang San, then the relationship between the first user A and the second user B is determined as friend relationship, and thereby it is possible to determine that the relationship between the second user B and the person being watched C is a elder-younger relationship.

In a particular embodiment, on the basis of the embodiment shown in Fig. 2, before step 207, there may also comprise the following steps:
step 303: sorting the pictures in the target face photo album in accordance with a chronological order of photographing or storage.

In this embodiment, when the viewer is watching pictures in the target face photo album, the pictures can be played in the form of slides. Regarding the playing sequence of the pictures, it can be determined in accordance with a chronological order of the time of photographing, or can also be determined in accordance with a chronological order of storage of the pictures into the target face photo album.

Correspondingly, the playing process in step 207 is:
step 304: playing the pictures in the target face photo album in order, and playing music corresponding to the target music type.

In this embodiment, when the viewer is not the creator of the face photo album, i.e., not the owner of the terminal device where the face photo album is located, by collecting the facial image of the viewer and matching it with the facial image corresponding to each face photo album of a plurality of face photo albums, when the viewer belongs to a certain face photo album, the relationship between the viewer and the person being watched can be obtained based on the category tag of the matched face photo album and the category tag of the target face photo album being watched, with the owner of the terminal device as an intermediary person, and thereby an automatic selecting and playing of music based on the relationship is realized.

Fig. 4 is a flowchart showing embodiment four of a method for playing music based on a face photo album according to an exemplary embodiment. As shown in Fig. 4, after the above step 301, the method may also comprise the following steps:
step 401: if there is no face photo album that matches with the facial image of the second user, acquiring character features of the second user.
Step 402: determining the relationship between the second user and the person being watched based on the character features and the relationship between the first user and the person being watched.

After step 402, the subsequent relevant steps are performed.

If no matched face photo album is found in a feature comparison between the facial image of the second user and the facial image corresponding to each face photo album of a plurality of face photo albums, extraction of specific feature points can be performed to the facial image of the second user to thereby obtain the features, such as gender and age group, of the second user. Wherein, the above feature points are, for example, hair, neck, canthus, region between nose and mouth, etc..

In this embodiment, a large amount of statistical analysis of the facial image can be performed in advance to obtain a correspondence relationship between the above specific feature points and the character features such as gender and age group.

Assume that the second user is determined to be a female within the age group of 50-60 through her features, and the relationship between the first user and the person being watched determined through the category tag of the target face photo album is a parentage relationship, then it can be considered that the relationship between the second user and the person being watched is an elder-younger relationship.

Besides, in this embodiment, in order to ensure accuracy of the determination result of the relationship, the character features, such as gender and age, of the first user can be stored in the terminal device in advance. Thus, the relationship between the second user and the person being watched can be determined in combination with the character features of the second user, the character features of the first user and the relationship between the first user and the person being watched.

Or, the character features of the person being watched, i.e., the facial image corresponding to each face photo album can also be pre-stored, thereby the relationship between the second user and the person being watched can be determined in combination with the character features of the second user, the character features of the person being watched and the relationship between the first user and the person being watched.

For instance, assume that the second user is determined to be a female within the age group of 20-25 through her features, the pre-stored character features of the first user indicates that the first user is a female aged 23, and the relationship between the first user and the person being watched determined through the category tag of the target face photo album is a husband-wife relationship, then it can be considered that the relationship between the second user and the person being watched is a friend relationship.

For another example, assume that the second user is determined to be a female within the age group of 20-25 through her features, the pre-stored features of the person being watched indicates that the person being watched is a female aged 23, and the relationship between the first user and the person being watched determined through the category tag of the target face photo album is a husband-wife relationship, then it can be considered that the relationship between the second user and the person being watched is a friend relationship.

In this embodiment, when the viewer is not the owner of the terminal device, and the viewer does not belong to a face photo album stored in the terminal device, by extracting features of the facial image of the viewer, the relationship between the viewer and the person being watched can be obtained based on the extracted features and the relationship between the owner of the terminal device and the person being watched with the owner of the terminal device as an intermediate person, and thereby an automatic selecting and playing of music based on relationship is realized.

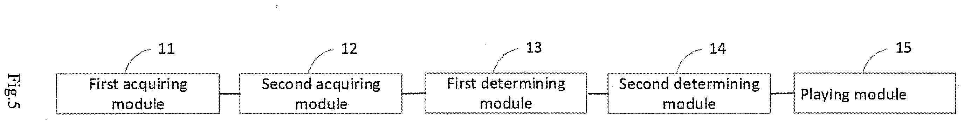

Fig. 5 is a block diagram showing embodiment one of an apparatus for playing music based on a face photo album according to an exemplary embodiment. As shown in Fig. 5, the apparatus comprises a first acquiring module 11, a second acquiring module 12, a first determining module 13, a second determining module 14 and a playing module 15.

The first acquiring module 11 is configured to acquire a watching instruction triggered by a user for watching pictures in a target face photo album.

The second acquiring module 12 is configured to acquire features of the user.

The first determining module 13 is configured to determine a relationship between the user and a person being watched whose face is depicted in the target face photo album based on the features of the user.

The second determining module 14 is configured to determine a target music type corresponding to the relationship determined by the first determining module based on a preset correspondence relationship between each relationship of a plurality of relationship and each music type of a plurality of music types.

The playing module 15 is configured to play the pictures in the target face photo album and to play music corresponding to the target music type determined by the second determining module.

The apparatus for playing music provided in this embodiment can be used to execute the technical solution of the method embodiment shown in Fig. 1.

In this embodiment, the above user that watches the pictures in the target face photo album in a certain terminal device may be the owner of the terminal device, and may not be the owner of the terminal device, for example, may be a relative of the owner. Therefore, when the first acquiring module 11 acquires a watching instruction triggered by a user through clicking to watch the target face photo album, the second acquiring module 12 is triggered to acquire the features of the user.

The features of the user, for example, may be features such as the facial image and fingerprint, etc. for recognizing the user identity. The identity of the user, i.e., the viewer, can be known based on the features.

Therefore, the first determining module 13 can determine the relationship between the user and the person being watched whose face is depicted in the target face photo album based on the features of the user. For a simple example, when the features of the user indicates that the user is the owner of the terminal device, or indicates that the user is not the owner of the terminal device, it can be roughly considered that when the user is the owner of the terminal device, the user belongs to an A type relationship with the viewer, and when the user is not the owner of the terminal device, the user belongs to a B type relationship with the viewer, respectively based on the preset user identity, i.e., whether the user is the owner of the terminal device, and the relationship with the person being watched.

Then, the second determining module 14 determines the target music type corresponding to the relationship between the current viewer and the person being watched based on the preset music type corresponding to each relationship of a plurality of relationship. The playing module 15 plays the music corresponding to the target music type while playing the pictures in the target face photo album.

In this embodiment, when the user needs to watch pictures in a certain face photo album, the relationship between the user and the facial image corresponding to the face photo album, i.e., the person being watched, can be determined based on the features of the user, and thereby it is possible to achieve an automatic selecting and playing of music of a corresponding music type based on the relationship. When a certain face photo album is watched, the corresponding music can be automatically selected and played based on the relationship between the viewer and the person being watched, which decreases the complexity of operations of the user and thereby improves the user experience.

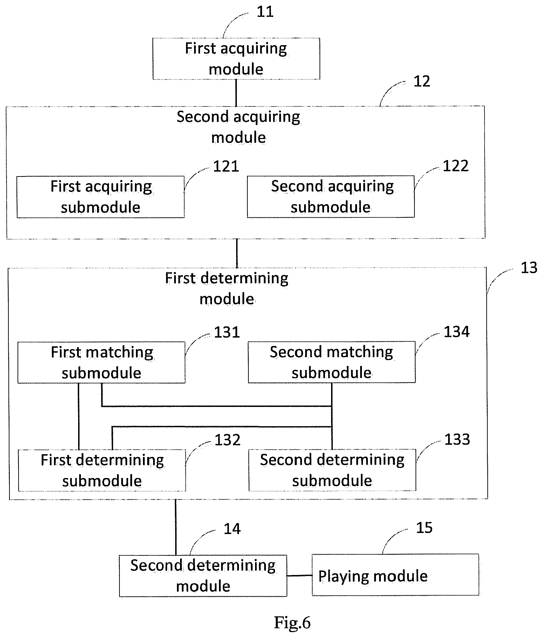

Fig. 6 is a block diagram showing embodiment two of an apparatus for playing music based on a face photo album according to an exemplary embodiment. As shown in Fig. 6, on the basis of the embodiment shown in Fig. 5, the second acquiring module 12 comprises: a first acquiring submodule 121 or a second acquiring submodule 122.

The first acquiring submodule 121 is configured to acquire fingerprint information of the user.

The second acquiring submodule 122 is configured to acquire a facial image of the user.

In a particular embodiment, the first determining module 13 comprises: a first matching submodule 131 and a first determining submodule 132 or a second determining submodule 133.

The first matching submodule 131 is configured to match the fingerprint information acquired by the first acquiring submodule 121 with preset fingerprint information of a first user.

The first determining submodule 132 is configured to, if the fingerprint information matches with the fingerprint information of the first user, determine the user as the first user, and determine a relationship between the first user and the person being watched whose face is depicted in the target face photo album based on a category tag set by the first user for the target face photo album.

The second determining submodule 133 is configured to, if the fingerprint information does not match with the fingerprint information of the first user, determine the user as a second user, and determine a relationship between the second user and the person being watched whose face is depicted in the target face photo album.

In a particular embodiment, the first determining module 13 comprises: a second matching submodule 134 and a first determining submodule 131 or a second determining submodule 132.

The second matching submodule 134 is configured to match the facial image acquired by the second acquiring submodule 122 with a preset facial image of the first user.

The first determining submodule 131 is configured to, if said facial image matches with the facial image of the first user, determine the user as the first user, and determine the relationship between the first user and the person being watched whose face is depicted in the target face photo album based on a category tag set by the first user for the target face photo album;
the second determining submodule 132 is configured to, if said facial image does not match with the facial image of the first user, determine the user as the second user, and determine the relationship between the second user and the person being watched whose face is depicted in the target face photo album.

The apparatus for playing music based on a face photo album provided in this embodiment can be used to execute the technical solution of the method embodiment shown in Fig. 2.

In this embodiment, the first user refers to the owner of the terminal device where a plurality of face photo albums comprising the above target face photo album are stored, i.e., the owner of the terminal device is the viewer, and, selecting a target face photo album intended to be watched from the plurality of face photo albums stored in the terminal device can trigger the transmitting of the above mentioned watching instruction to the terminal device.

Regarding the identity recognition process regarding whether the user is the first user or not, after the receiving of the watching instruction triggered by the user, the second acquiring submodule 122 photographs the facial image of the user, the second matching submodule 134 performs a feature matching to the facial image with the facial image of the first user which is pre-stored in the terminal device, and thereby whether the user is the first user is determined, and if the user is not the first user, the user is determined to be a second user.

During the process in which the second matching submodule 134 matches the acquired facial image with the preset facial image of the first user, the feature points, such as the feature points of profile, eyes, nose, mouth and ears, etc., of each facial image can be extracted first. Then, a similarity measurement is performed to the feature points of the photographed facial image with the feature points of the facial image of the first user, and if the similarity is greater than a certain threshold, they are considered to be matched, and the first determining submodule 132 determines the user to be the first user, otherwise the second determining submodule 133 determines the user to be the second user.

The above is a basis for distinguishing the first user and the second user by taking the facial image as the features of the user. In a particular embodiment, fingerprint information of the user can also be taken as the features of the user as a basis for distinguishing the first user and the second user.

To be specific, when the user triggers a watching instruction, since the trigger action may be done by clicking a target face photo album, the first acquiring submodule 121 can collect the fingerprint information of the user based on the trigger action of the user. Then, the first matching submodule 131 matches the acquired fingerprint information with the preset fingerprint information of the first user; if the fingerprint information matches with the fingerprint information of the first user, the first determining submodule 132 determines the user to be the first user, and determines the relationship between the first user and the person being watched whose face is depicted in the target face photo album based on the category tag set by the first user for the target face photo album; and if the fingerprint information does not match with the fingerprint information of the first user, the user is determined to be a second user, and the relationship between the second user and the person being watched in the pictures in the target face photo album is determined.

In this embodiment, detailed explanation will be given on how to determine the relationship between the first user and the person being watched when the user is the first user, and the determination of the relationship between the second user and the person being watched will be described in the subsequent embodiments in detail.

The terminal device has stored a plurality of face photo albums. When the first user creates each face photo album, he can set a category tag for each face photo album, which tag may be the name of each face photo album, such as baby, parents and wife, and the like. Thus, the relationship, such as father-son and husband-wife relationships and the like, between the first user and the person being watched corresponding to the face photo album can be determined based on the category tag.

Of course, the above is only a very simple and intuitional example, while in practical applications, the category tags may represent multidimensional classifications. For instance, first a coarse classification can be performed to all the face photo albums according to family members, friends and colleagues, and then a more fine-grained classification is performed under the each of the coarse classifications, for example, under the coarse classification of family members, disaggregated classifications such as baby and parents are performed; and under the coarse classification of friends, disaggregated classifications distinguished by names such as Zhang San and Li Si are performed. As such, the category tag for each face photo album may consist of the two main dimensions of coarse classification and disaggregated classification.

When the first user triggers the watching of pictures in a certain target face photo album, based on the category tag of the target face photo album, the relationship between the first user and the person being watched can be determined. For example, if the first user clicks to watch the face photo album of which the category tag is family members - son, for example a baby, it is possible to determine based on the category tag that the first user and the baby in the face photo album are in a parentage relationship.

In this embodiment, the correspondence relationship between each relationship of a plurality of relationships and each music type of a plurality of music types can be preset, for example, parentage relationship corresponds to the music type that is bright and of child interests, and love relationship corresponds to the music type of sweet love songs.

Thus, after the relationship between the first user and the person being watched is determined, based on the above preset correspondence relationship, the corresponding target music type is obtained by matching. In a case where each music type is only bound with one piece of music, the music can be directly played while the pictures in the target face photo album are played. Of course, in a case where each music type is bound with a plurality of pieces of music, the music can be selectively played in accordance with a preset playing mode, such as a random playing mode and a loop playing mode.

In this embodiment, in a case where the first user performs a sorted storing of the pictures photographed by the user with face photo albums and set a category tag for each of the face photo albums, when the first user needs to watch pictures in a certain face photo album, the relationship between the first user and the facial image corresponding to the face photo album, i.e., the person being watched, can be determined based on the category tag, and thereby it is possible to achieve an automatic selecting and playing of music of a corresponding music type based on the relationship. When a certain face photo album is watched, the corresponding music can be automatically selected and played based on the relationship between the viewer and the person being watched, which decreases the complexity of operations of the user, and thereby improves the user experience.

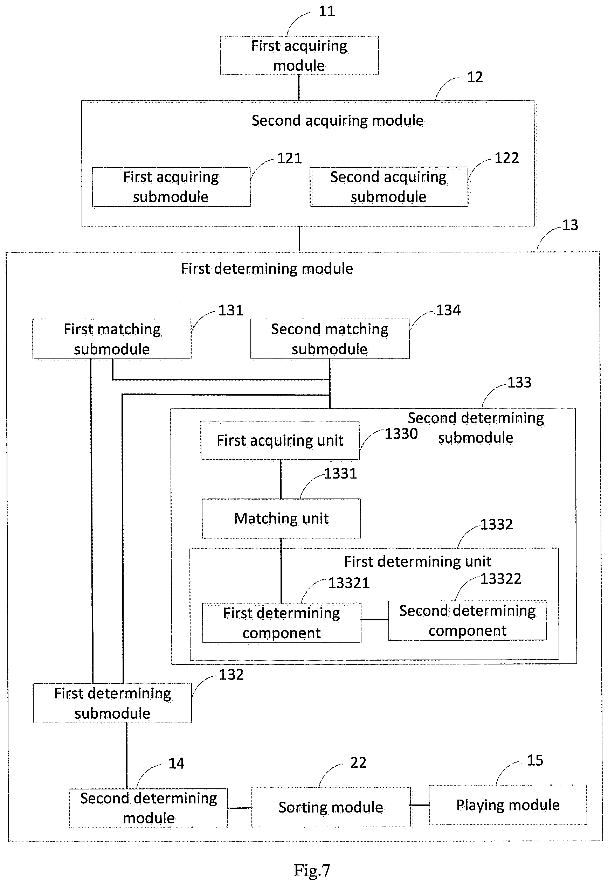

Fig. 7 is a block diagram showing embodiment three of a method for playing music based on a face photo album according to an exemplary embodiment. As shown in Fig. 7, on the basis of the embodiment shown in Fig. 6, the second determining submodule 133 comprises: a first acquiring unit 1330, a matching unit 1331 and a first determining unit 1332.

The first acquiring unit 1330 is configured to acquire a facial image of the second user.

The matching unit 1331 is configured to match the facial image of the second user with the facial image corresponding to each face photo album of a plurality of face photo albums.

The first determining unit 1332 is configured to, if the matching unit 1331 matches the facial image of the second user to a face photo album, determine the relationship between the second user and the person being watched based on the category tag of the matched face photo album and the category tag of the target face photo album.

The first determining unit 1332 comprises: a first determining component 13321 and a second determining component 13322.

The first determining component 13321 is configured to determine the relationship between the first user and the second user based on the category tag of the matched face photo album.

The second determining component 13322 is configured to determine the relationship between the second user and the person being watched based on the relationship between the first user and the person being watched determined by the first determining submodule 132 and the relationship between the first user and the second user determined by the first determining component 13321.

In a particular embodiment, the apparatus for playing music based on a face photo album further comprises: a sorting module 21.

The sorting module 21 is configured to sort the pictures in the target face photo album in accordance with a chronological order of photographing or storage.

The apparatus for playing music based on a face photo album provided in this embodiment can be used to execute the technical solution of the method embodiment shown in Fig. 3.

In this embodiment, when the viewer is not only the owner of the terminal device, i.e., the first user, but is the second user, the above mentioned facial image of the second user can be acquired during the process of recognizing the user identity by taking the facial image as the features of the user. However, during the process of recognizing the user identity by taking the fingerprint information as the features of the user, the facial image of the second user can be acquired after the current user is determined to be the second user when the first acquiring unit 1330 is triggered to photograph the facial image of the second user, such as to photograph using the front camera of the terminal device.

What is worth explaining is that in a case where viewers comprise a plurality of persons, i.e., corresponding to the above mentioned situation of watching together, the photographed picture contains a plurality of facial images, and a face recognition technology such as Adaboost technology can be used to perform the face recognition processing, so as to obtain each of the facial images.

Then, the matching unit 1331 matches the acquired facial image of the second user with the facial image corresponding to each face photo album of a plurality of face photo albums, i.e., the similarity measurement. During the matching process, the feature points, such as the feature points of profile, eyes, nose, mouth and ears, etc., of each facial image can be extracted first. Then, similarity measurement is performed to the feature points of the photographed facial image with the feature points of the facial image corresponding to each face photo album of a plurality of face photo albums, and if the similarity is greater than a certain threshold, they are considered to be matched.

What is worth explaining is that the feature points of the facial image corresponding to each face photo album of a plurality of face photo albums can be pre-extracted and stored, and when there is a need to perform the above matching processing, it only requires the extraction of the feature points of the photographed facial image in real time, and thereby the matching processing efficiency is improved.

When the facial image of the second user is matched to a certain face photo album, it indicates that the face photo album of the second user has also been stored in the terminal device of the first user, therefore, the matched face photo album also has a category tag set by the first user. Thus the first determining unit 1332 can determine the relationship between the second user and the person being watched in combination with the category tag and the category tag of the target face photo album being watched.

To be specific, similar to the determination of the relationship between the first user and the person being watched, the first determining component 13321 can determine the relationship between the first user and the second user based on the category tag of the matched face photo album, and then, the second determining component 13322 can determine the relationship between the second user and the person being watched based on the relationship between the first user and the person being watched and the relationship between the first user and the second user.

For instance, assume that the viewer is B, and B is the second user, the first user is A, and the person being watched is C. Wherein, assume that the category tag set by the first user A for the target face photo album corresponding to the person being watched is baby, then the relationship between the first user A and the person being watched C is a parentage relationship; assume that after the facial image matching processing, the second user B corresponds to the face photo album with a tag of friend-Zhangsan, then the relationship between the first user A and the second user B is determined to be a friend relationship, and thereby it is possible to determine that the relationship between the second user B and the person being watched C is a elder-younger relationship.

In this embodiment, when the viewer is watching pictures in the target face photo album, the pictures can be played in the form of slides. Regarding the playing sequence of the pictures, the sorting module 21 can determine it in accordance with a chronological order of photographing, or can also determine it in accordance with a chronological order of storage of the pictures into the target face photo album.

In this embodiment, when the viewer is not the creator of the face photo album, i.e., not the owner of the terminal device where the face photo album is located, by collecting the facial image of the viewer and matching it with the facial image corresponding to each face photo album of a plurality of face photo albums, when the viewer belongs to a certain face photo album, the relationship between the viewer and the person being watched can be obtained based on the category tag of the matched face photo album and the category tag of the target face photo album being watched, with the owner of the terminal device as an intermediary person, and thereby an automatic selecting and playing of music based on the relationship is realized.

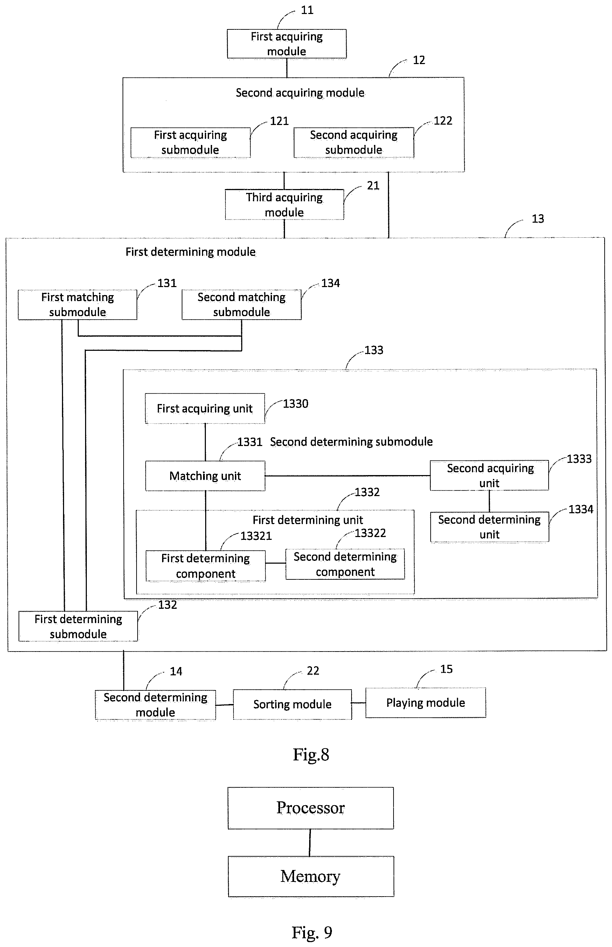

Fig. 8 is a block diagram showing embodiment three of an apparatus for playing music based on a face photo album according to an exemplary embodiment. As shown in Fig. 8, on the basis of the embodiment shown in Fig. 6, the second determining submodule 133 comprises: an acquiring unit 1333 and a second determining unit 1334.

The acquiring unit 1333 is configured to, if the matching unit fails to match the facial image of the second user to a face photo album, acquire character features of the second user.

The second determining unit 1334 is configured to determine the relationship between the second user and the person being watched based on the character features acquired by the acquiring unit and the relationship between the first user and the person being watched determined by the first determining submodule, and the character features comprises age group features and/or gender features.

The apparatus for playing music based on a face photo album provided in this embodiment can be used to execute the technical solution of the method embodiment shown in Fig. 4.

When feature comparison is performed to the facial image of the second user with the facial image corresponding to each face photo album of a plurality of face photo albums, and no matched face photo album is found, the acquiring unit 1333 can extract specific feature points of the facial image of the second user to obtain the character features of the second user, such as gender and age group. Wherein, the above feature points are, for example, hair, neck, canthus, region between nose and mouth, etc..

In this embodiment, a large amount of statistical analysis of the facial image can be performed in advance to obtain a correspondence relationship between the above specific feature points and the features such as gender and age group.

Assume that it is determined through the features of the second user that the second user is a female within the age group of 50-60, and the relationship between the first user and the person being watched determined through the category tag of the target face photo album is a parentage relationship, then the second determining unit 1334 can consider that the relationship between the second user and the person being watched is an elder-younger relationship.

Besides, in this embodiment, in order to ensure accuracy of the result of the relationship determination, the character features, such as gender and age, of the first user can be stored in the terminal device in advance. Thus, the relationship between the second user and the person being watched can be determined in combination with the character features of the second user, the character features of the first user and the relationship between the first user and the person being watched.

Or, the character features of the person being watched, i.e., the facial image corresponding to each face photo album of a plurality of face photo albums can also be pre-stored, thereby the second determining unit 1324 can determine the relationship between the second user and the person being watched in combination with the character features of the second user, the character features of the person being watched and the relationship between the first user and the person being watched.

For instance, assume that the second user is determined to be a female within the age group of 20-25 through her features, the pre-stored features of the first user indicates that the first user is a female aged 23, and the relationship between the first user and the person being watched determined through the category tag of the target face photo album is a husband-wife relationship, then it can be considered that the relationship between the second user and the person being watched is a friend relationship.

For another example, assume that the second user is determined to be a female within the age group of 20-25 through her features, the pre-stored character features of the person being watched indicates that the person being watched is a female aged 23, and the relationship between the first user and the person being watched determined through the category tag of the target face photo album is a husband-wife relationship, then it can be considered that the relationship between the second user and the person being watched is a friend relationship.

In this embodiment, when the viewer is not the owner of the terminal device, and the viewer does not belong to a certain face photo album stored in the terminal device, by extracting features of the facial image of the viewer, the relationship between the viewer and the person being watched can be obtained based on the extracted features and the relationship between the owner of the terminal device and the person being watched, with the owner of the terminal device as an intermediate person, and thereby an automatic selecting and playing of music based on the relationship is realized.

Regarding the apparatus for playing music based on a face photo album in the above embodiment, the specific manners in which each of the modules and submodules in the apparatus executes the operations have been described in detail in the embodiments concerning the method, and thus will not be illustrated here in detail.

The above has described the inner functions and structures of the apparatus for playing music based on a face photo album, as shown in Fig. 9, in practice, the apparatus for playing music based on a face photo album can be implemented as a terminal device, comprising:
a processor;
a memory configured to store processor executable instructions;
wherein, the processor is configured to:
   acquire a watching instruction triggered by a user for watching pictures in a target face photo album;
   acquire features of the user;
   determine a relationship between the user and a person being watched whose face is depicted in the target face photo album based on the features of the user;
   determine a target music type corresponding to the relationship based on a preset correspondence relationship between each relationship of a plurality of relationship and each music type of a plurality of music types;
   play the pictures in the target face photo album and play music corresponding to the target music type.

In this embodiment, when the user needs to watch pictures in a certain face photo album, the relationship between the user and the facial image corresponding to the face photo album, i.e., the person being watched, can be determined based on the features of the user, and thereby it is possible to achieve an automatic selecting and playing of music of a corresponding music type based on the relationship. When a certain face photo album is watched, it is possible to automatically select and play the corresponding music based on the relationship between the viewer and the person being watched, which decreases the complexity of operations of the user and t the user experience.

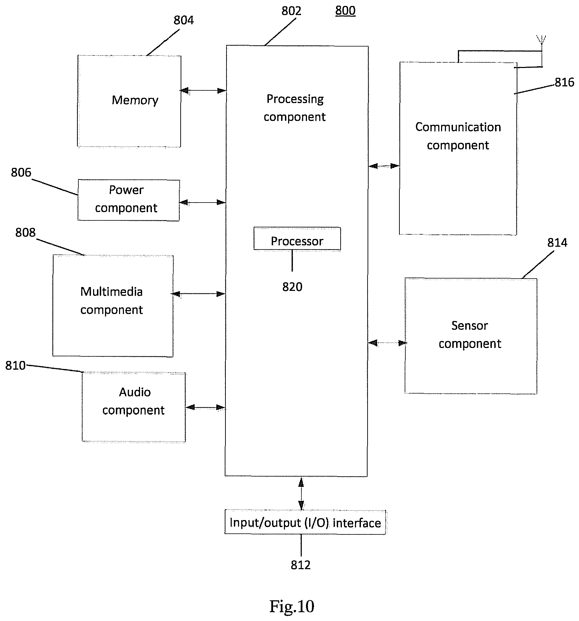

Fig. 10 is a block diagram showing another terminal device according to an exemplary embodiment. For example, the terminal device 800 may be a mobile phone, a computer, a digital broadcast terminal, a messaging device, a gaming console, a tablet, a medical device, exercise equipment, a personal digital assistant or the like.

Referring to Fig. 10, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may comprise one or more processor 820 to execute instructions to accomplish all of or part of the steps in the above method. Moreover, the processing component 1802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes a touch panel, the screen can be implemented as a touch screen for receiving input signal from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 1812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor which is configured to be used for detecting existence of nearby objects when there is no physical contact. The sensor component 814 may also include an optical sensor, such as CMOS or CCD image sensor, to be used in imaging apparatus. In some embodiments, the sensor component 814 may include an acceleration sensor, a gyroscope sensor, a magnetic sensor, a pressure sensor or a temperature sensor.

The communication component 816 is configured to facilitate communication, wired or wirelessly, between the terminal device 800 and other devices. The terminal device 800 can access a wireless network based on communication standards, such as WiFi, 2G or 3G, or a combination thereof. In one exemplary embodiment, the communication component 816 receives a broadcast signal or broadcast associated information from an external broadcast management system via a broadcast channel. In an exemplary embodiment, the communication component 816 further includes a near field communication (NFC) module to promote short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium comprising instructions, such as included in the memory 804, executable by the processor 820 in the terminal device 800, for performing the above-described methods. For example, the non-transitory computer-readable storage medium may be a ROM, a random access memory (RAM), a CD-ROM, a magnetic tape, a floppy disc, an optical data storage device, and the like.

When the instructions in the storage medium are executed by the processor of the mobile terminal, a non-transitory computer readable storage medium enables the mobile terminal to execute a method for playing music based on a face photo album, the method comprising:
acquiring a watching instruction triggered by a user for watching pictures in a target face photo album;
acquiring features of the user;
determining a relationship between the user and a person being watched whose face is depicted in the target face photo album based on the features of the user;
determining a target music type corresponding to the relationship based on a preset correspondence relationship between each relationship of a plurality of relationship and each music type of a plurality of music types;
playing the pictures in the target face photo album and playing music corresponding to the target music type.

Other embodiments of the invention will be apparent to those skilled in the art from consideration of the specification and practice of the invention disclosed here. This application is intended to cover any variations, uses, or adaptations of the invention following the general principles thereof and comprising such departures from the present invention as come within known or customary practice in the art. It is intended that the specification and examples be considered as exemplary only, with a true scope of the invention being indicated by the following claims.

## Claims

1. A method executed by an apparatus for playing music based on a target face photo album in a terminal device,
**characterized in that** it comprises:
acquiring from a first acquiring module (11) a watching instruction triggered by a user for watching pictures in the target face photo album, wherein the watching instruction is triggered by the user's selection of the target face photo album;
acquiring from a second acquiring module (12) features of the user to determine whether the user is a first user or a second user based on the acquired features, wherein the features of the user include a fingerprint or a facial image of the user;
determining a relationship between the user and a person being watched whose face is depicted in the target face photo album using a first determining module (13), wherein
the relationship between the user and the person being watched whose face is depicted in the target face photo album is determined based on a category tag set by the user for the target face photo album, if the user is determined as the first user; and
the relationship between the user and the person being watched whose face is depicted in the target face photo album is determined based on the category tag set by the first user for the target face photo album and a category tag set by the first user for a face photo album that matches with a facial image of the second user, if the user is determined as the second user;
determining a target music type corresponding to the relationship based on a preset correspondence relationship between each relationship of a plurality of relationships and each music type of a plurality of music types using a second determining module (14);
playing the pictures in the target face photo album and playing music corresponding to the target music type using a playing module (15).

2. The method according to claim 1, wherein acquiring (102) the features of the user comprises:
acquiring fingerprint information of the user; and
wherein determining (103) the relationship between the user and the person being watched whose face is depicted in the target face photo album comprises:
matching the fingerprint information with preset fingerprint information of a first user;
if the fingerprint information matches with the fingerprint information of the first user, determining the user as the first user, and determining the relationship between the first user and the person being watched whose face is depicted in the target face photo album based on a category tag set by the first user for the target face photo album;
if the fingerprint information does not match with the fingerprint information of the first user, determining the user as a second user, and determining the relationship between the second user and the person being watched whose face is depicted in the target face photo album.

3. The method according to claim 2, wherein determining the user as the second user and determining the relationship between the second user and the person being watched whose face is depicted in the target face photo album comprise:
acquiring a facial image of the second user;
matching the facial image of the second user with facial images corresponding to each face photo album of a plurality of face photo albums;
if there is a face photo album that matches with the facial image of the second user, determining the relationship between the second user and the person being watched based on the category tag of the matched face photo album and the category tag of the target face photo album.

4. The method according to claim 1, wherein acquiring (102, 202) the features of the user comprises:
acquiring a facial image of the user (202); and
wherein determining the relationship between the user and the person being watched whose face is depicted in the target face photo album comprises:
matching (203) the facial image with a preset facial image of a first user;
if the facial image matches with the facial image of the first user, determining the user as the first user, and determining the relationship between the first user and the person being watched whose face is depicted in the target face photo album based on a category tag set by the first user for the target face photo album;
if the facial image does not match with the facial image of the first user, determining the user as a second user, and determining the relationship between the second user and the person being watched whose face is depicted in the target face photo album.

5. The method according to claim 4, wherein determining the relationship between the second user and the person being watched whose face is depicted in the target face photo album comprises:
matching (301) the facial image of the second user with facial images corresponding to each face photo album of a plurality of face photo albums;
if there is a face photo album that matches with the facial image of the second user, determining (302) the relationship between the second user and the person being watched based on the category tag of the matched face photo album and the category tag of the target face photo album.

6. The method according to claim 3 or 5, wherein determining (302) the relationship between the second user and the person being watched based on the category tag of the matched face photo album and the category tag of the target face photo album comprises:
determining the relationship between the first user and the second user based on the category tag of the matched face photo album;
determining the relationship between the second user and the person being watched based on the relationship between the first user and the person being watched and the relationship between the first user and the second user.

7. The method according to claim 3 or 5, further comprising:
if there is no face photo album that matches with the facial image of the second user, acquiring (401) features of the second user;
determining (402) the relationship between the second user and the person being watched based on the features of the second user and the relationship between the first user and the person being watched, the features comprising age group information and/or gender information.

8. An apparatus for playing music based on a target face photo album, **characterized in that** it comprises:
a first acquiring module (11) configured to acquire a watching instruction triggered by a user for watching pictures in the target face photo album, wherein the watching instruction is triggered by the user's selection of the target face photo album;
a second acquiring module (12) configured to acquire features of the user to determine whether the user is a first user or a second user based on the acquired features, wherein the features of the user include a fingerprint or a facial image of the user;
a first determining module (13) configured to determine a relationship between the user and a person being watched whose face is depicted in the target face photo album, wherein
the relationship between the user and the person being watched whose face is depicted in the target face photo album is determined based on a category tag set by the user for the target face photo album, if the user is determined as the first user; and
the relationship between the user and the person being watched whose face is depicted in the target face photo album is determined based on the category tag set by the first user for the target face photo album and a category tag set by the first user for a face photo album that matches with a facial image of the second user, if the user is determined as the second user;
a second determining module (14) configured to determine a target music type corresponding to the relationship determined by the first determining module based on a preset correspondence relationship between each relationship of a plurality of relationships and each music type of a plurality of music types;
a playing module (15) configured to play pictures in the target face photo album and to play music corresponding to the target music type determined by the second determining module.

9. The apparatus according to claim 8, wherein the second acquiring module (12) comprises:
a first acquiring submodule (121) configured to acquire fingerprint information of the user; and
wherein the first determining module (13) comprises:
a first matching submodule (131) configured to match the fingerprint information acquired by the first acquiring submodule with preset fingerprint information of a first user;
a first determining submodule (132) configured to, if the fingerprint information matches with the fingerprint information of the first user, determine the user as the first user, and determine the relationship between the first user and the person being watched whose face is depicted in the target face photo album based on a category tag set by the first user for the target face photo album;
a second determining submodule (133) configured to, if the fingerprint information does not match with the fingerprint information of the first user, determine the user as a second user, and determine the relationship between the second user and the person being watched whose face is depicted in the target face photo album.

10. The apparatus according to claim 9, wherein the second determining submodule (14) comprises:
a first acquiring unit configured to acquire a facial image of the second user;
a matching unit configured to match the facial image of the second user with the facial image corresponding to each face photo album of a plurality of face photo albums;
a first determining unit configured to, if there is a face photo album that matches with the facial image of the second user, determine the relationship between the second user and the person being watched based on the category tag of the matched face photo album and the category tag of the target face photo album.

11. The apparatus according to claim 8, wherein the second acquiring module (12) comprises:
a second acquiring submodule (122) configured to acquire a facial image of the user;
the first determining module (13) comprises:
a second matching submodule (134) configured to match the facial image acquired by the second acquiring submodule (122) with a preset facial image of a first user;
the first determining submodule (132) is configured to, if the facial image matches with the facial image of the first user, determine the user as the first user, and determine the relationship between the first user and the person being watched whose face is depicted in the target face photo album based on a category tag set by the first user for the target face photo album;
the second determining submodule (133) is configured to, if the facial image does not match with the facial image of the first user, determine the user as a second user, and determine the relationship between the second user and the person being watched whose face is depicted in the target face photo album.

12. The apparatus according to claim 11, wherein the second determining submodule (14) comprises:
a matching unit (1331) configured to match the facial image of the second user with the facial image corresponding to each face photo album of a plurality of face photo albums;
a first determining unit (1332) configured to, if the matching unit matches the facial image of the second user to a face photo album, determine the relationship between the second user and the person being watched based on the category tag of the matched face photo album and the category tag of the target face photo album.

13. The apparatus according to claim 10 or 12, wherein the first determining unit (1332) comprises:
a first determining component (13321) configured to determine the relationship between the first user and the second user based on the category tag of the matched face photo album;
a second determining component (13322) configured to determine the relationship between the second user and the person being watched based on the relationship between the first user and the person being watched determined by the first determining submodule (132) and the relationship between the first user and the second user determined by the first determining component (13321).

14. The apparatus according to claim 10 or 12, wherein the second determining submodule (133) further comprises:
a second acquiring unit configured to, if the matching unit fails to match the facial image of the second user to a face photo album, acquire features of the second user;
a second determining unit configured to determine the relationship between the second user and the person being watched based on the features acquired by the second acquiring unit and the relationship between the first user and the person being watched determined by the first determining submodule, the features comprising age group information and/or gender information.

15. A computer program including instructions for executing the step of a method according to any one of claims 1 to 7 when said program is executed by a computer.

## Patentansprüche

1. Verfahren, das von einer Vorrichtung zum Abspielen von Musik basierend auf einem Ziel-Gesichtsfotoalbum in einem Endgerät ausgeführt wird,
**dadurch gekennzeichnet, dass** es umfasst:
Erlangen einer von einem Benutzer ausgelösten Betrachtungsanweisung zum Betrachten von Bildern in dem Ziel-Gesichtsfotoalbum von einem ersten Erlangungsmodul (11), wobei die Betrachtungsanweisung durch die Auswahl des Ziel-Gesichtsfotoalbums durch den Benutzer ausgelöst wird,
Erlangen von Merkmalen des Benutzers zum Bestimmen, ob der Benutzer ein erster Benutzer oder ein zweiter Benutzer ist, basierend auf den erlangten Merkmalen, von einem zweiten Erlangungsmodul (12), wobei die Merkmale des Benutzers einen Fingerabdruck oder ein Gesichtsbild des Benutzers beinhalten,
Bestimmen einer Beziehung zwischen dem Benutzer und einer Person, die betrachtet wird und deren Gesicht in dem Ziel-Gesichtsfotoalbum abgebildet ist, unter Verwendung eines ersten Bestimmungsmoduls (13), wobei
die Beziehung zwischen dem Benutzer und der Person, die betrachtet wird und deren Gesicht in dem Ziel-Gesichtsfotoalbum abgebildet ist, basierend auf einem von dem Benutzer für das Ziel-Gesichtsfotoalbum festgelegten Kategorieschlagwort bestimmt wird, wenn der Benutzer als der erste Benutzer bestimmt wird, und
die Beziehung zwischen dem Benutzer und der Person, die betrachtet wird und deren Gesicht in dem Ziel-Gesichtsfotoalbum abgebildet ist, basierend auf dem von dem ersten Benutzer für das Ziel-Gesichtsfotoalbum festgelegten Kategorieschlagwort und einem von dem ersten Benutzer für ein Gesichtsfotoalbum festgelegten Kategorieschlagwort, das mit einem Gesichtsbild des zweiten Benutzers übereinstimmt, bestimmt wird, wenn der Benutzer als der zweite Benutzer bestimmt wird,
Bestimmen eines Ziel-Musiktyps, welcher der Beziehung entspricht, basierend auf einer voreingestellten Korrespondenzbeziehung zwischen jeder Beziehung von mehreren Beziehungen und jedem Musiktyp von mehreren Musiktypen unter Verwendung eines zweiten Bestimmungsmoduls (14),
Abspielen der Bilder in dem Ziel-Gesichtsfotoalbum und
Abspielen von Musik, die dem Ziel-Musiktyp entspricht, unter Verwendung eines Abspielmoduls (15).

2. Verfahren nach Anspruch 1,
wobei das Erlangen (102) der Merkmale des Benutzers umfasst:
Erlangen von Fingerabdruckinformationen des Benutzers, und
wobei das Bestimmen (103) der Beziehung zwischen dem Benutzer und der Person, die betrachtet wird und deren Gesicht in dem Ziel-Gesichtsfotoalbum abgebildet ist, umfasst:
Abgleichen der Fingerabdruckinformationen mit voreingestellten Fingerabdruckinformationen eines ersten Benutzers,
wenn die Fingerabdruckinformationen mit den Fingerabdruckinformationen des ersten Benutzers übereinstimmen, Bestimmen des Benutzers als den ersten Benutzer und Bestimmen der Beziehung zwischen dem ersten Benutzer und der Person, die betrachtet wird und deren Gesicht in dem Ziel-Gesichtsfotoalbum abgebildet ist, basierend auf einem von dem ersten Benutzer für das Ziel-Gesichtsfotoalbum festgelegten Kategorieschlagwort,
wenn die Fingerabdruckinformationen nicht mit den Fingerabdruckinformationen des ersten Benutzers übereinstimmen, Bestimmen des Benutzers als einen zweiten Benutzer und Bestimmen der Beziehung zwischen dem zweiten Benutzer und der Person, die betrachtet wird und deren Gesicht in dem Ziel-Gesichtsfotoalbum abgebildet ist.

3. Verfahren nach Anspruch 2, wobei das Bestimmen des Benutzers als den zweiten Benutzer und das Bestimmen der Beziehung zwischen dem zweiten Benutzer und der Person, die betrachtet wird und deren Gesicht in dem Ziel-Gesichtsfotoalbum abgebildet ist, umfassen:
Erlangen eines Gesichtsbildes des zweiten Benutzers,
Abgleichen des Gesichtsbildes des zweiten Benutzers mit Gesichtsbildern, die jedem Gesichtsfotoalbum von mehreren Gesichtsfotoalben entsprechen, und,
wenn es ein Gesichtsfotoalbum gibt, das mit dem Gesichtsbild des zweiten Benutzers übereinstimmt, Bestimmen der Beziehung zwischen dem zweiten Benutzer und der Person, die betrachtet wird, basierend auf dem Kategorieschlagwort des übereinstimmenden Gesichtsfotoalbums und dem Kategorieschlagwort des Ziel-Gesichtsfotoalbums.

4. Verfahren nach Anspruch 1,
wobei das Erlangen (102, 202) der Merkmale des Benutzers umfasst:
Erlangen eines Gesichtsbildes des Benutzers (202) und
wobei das Bestimmen der Beziehung zwischen dem Benutzer und der Person, die betrachtet wird und deren Gesicht in dem Ziel-Gesichtsfotoalbum abgebildet ist, umfasst:
Abgleichen (203) des Gesichtsbildes mit einem vorher festgelegten Gesichtsbild eines ersten Benutzers,
wenn das Gesichtsbild mit dem Gesichtsbild des ersten Benutzers übereinstimmt, Bestimmen des Benutzers als den ersten Benutzer und Bestimmen der Beziehung zwischen dem ersten Benutzer und der Person, die betrachtet wird und deren Gesicht in dem Ziel-Gesichtsfotoalbum abgebildet ist, basierend auf einem von dem ersten Benutzer für das Ziel-Gesichtsfotoalbum festgelegten Kategorieschlagwort,
wenn das Gesichtsbild nicht mit dem Gesichtsbild des ersten Benutzers übereinstimmt, Bestimmen des Benutzers als einen zweiten Benutzer und Bestimmen der Beziehung zwischen dem zweiten Benutzer und der Person, die betrachtet wird und deren Gesicht in dem Ziel-Gesichtsfotoalbum abgebildet ist.

5. Verfahren nach Anspruch 4, wobei das Bestimmen der Beziehung zwischen dem zweiten Benutzer und der Person, die betrachtet wird und deren Gesicht in dem Ziel-Gesichtsfotoalbum abgebildet ist, umfasst:
Abgleichen (301) des Gesichtsbildes des zweiten Benutzers mit Gesichtsbildern, die jedem Gesichtsfotoalbum von mehreren Gesichtsfotoalben entsprechen,
wenn es ein Gesichtsfotoalbum gibt, das mit dem Gesichtsbild des zweiten Benutzers übereinstimmt, Bestimmen (302) der Beziehung zwischen dem zweiten Benutzer und der Person, die betrachtet wird, basierend auf dem Kategorieschlagwort des übereinstimmenden Gesichtsfotoalbums und dem Kategorieschlagwort des Ziel-Gesichtsfotoalbums.

6. Verfahren nach Anspruch 3 oder 5, wobei das Bestimmen (302) der Beziehung zwischen dem zweiten Benutzer und der Person, die betrachtet wird, basierend auf dem Kategorieschlagwort des übereinstimmenden Gesichtsfotoalbums und dem Kategorieschlagwort des Ziel-Gesichtsfotoalbums umfasst:
Bestimmen der Beziehung zwischen dem ersten Benutzer und dem zweiten Benutzer basierend auf dem Kategorieschlagwort des übereinstimmenden Gesichtsfotoalbums,
Bestimmen der Beziehung zwischen dem zweiten Benutzer und der Person, die betrachtet wird, basierend auf der Beziehung zwischen dem ersten Benutzer und der Person, die betrachtet wird, und der Beziehung zwischen dem ersten Benutzer und dem zweiten Benutzer.

7. Verfahren nach Anspruch 3 oder 5, ferner umfassend:
wenn es kein Gesichtsfotoalbum gibt, das mit dem Gesichtsbild des zweiten Benutzers übereinstimmt, Erlangen (401) von Merkmalen des zweiten Benutzers,
Bestimmen (402) der Beziehung zwischen dem zweiten Benutzer und der Person, die betrachtet wird, basierend auf den Merkmalen des zweiten Benutzers und der Beziehung zwischen dem ersten Benutzer und der Person, die betrachtet wird, wobei die Merkmale Altersgruppeninformationen und/oder Geschlechtsinformationen umfassen.

8. Vorrichtung zum Abspielen von Musik basierend auf einem Ziel-Gesichtsfotoalbum, **gekennzeichnet dadurch, dass** sie umfasst:
ein erstes Erlangungsmodul (11), das dazu ausgestaltet ist, eine von einem Benutzer ausgelöste Betrachtungsanweisung zum Betrachten von Bildern in dem Ziel-Gesichtsfotoalbum zu erlangen, wobei die Betrachtungsanweisung durch die Auswahl des Ziel-Gesichtsfotoalbums durch den Benutzer ausgelöst wird,
ein zweites Erlangungsmodul (12), das dazu ausgestaltet ist, Merkmale des Benutzers zu erlangen, um zu bestimmen, ob der Benutzer ein erster Benutzer oder ein zweiter Benutzer ist, basierend auf den erlangten Merkmalen, wobei die Merkmale des Benutzers einen Fingerabdruck oder ein Gesichtsbild des Benutzers beinhalten,
ein erstes Bestimmungsmodul (13), das dazu ausgestaltet ist, eine Beziehung zwischen dem Benutzer und einer Person, die betrachtet wird und deren Gesicht in dem Ziel-Gesichtsfotoalbum abgebildet ist, zu bestimmen, wobei
die Beziehung zwischen dem Benutzer und der Person, die betrachtet wird und deren Gesicht in dem Ziel-Gesichtsfotoalbum abgebildet ist, basierend auf einem von dem Benutzer für das Ziel-Gesichtsfotoalbum festgelegten Kategorieschlagwort bestimmt wird, wenn der Benutzer als der erste Benutzer bestimmt wird, und
die Beziehung zwischen dem Benutzer und der Person, die betrachtet wird und deren Gesicht in dem Ziel-Gesichtsfotoalbum abgebildet ist, basierend auf dem von dem ersten Benutzer für das Ziel-Gesichtsfotoalbum festgelegten Kategorieschlagwort und einem von dem ersten Benutzer für ein Gesichtsfotoalbum festgelegten Kategorieschlagwort, das mit einem Gesichtsbild des zweiten Benutzers übereinstimmt, bestimmt wird, wenn der Benutzer als der zweite Benutzer bestimmt wird,
ein zweites Bestimmungsmodul (14), das dazu ausgestaltet ist, einen Ziel-Musiktyp zu bestimmen, welcher der Beziehung entspricht, die durch das erste Bestimmungsmodul basierend auf einer vorher festgelegten Korrespondenzbeziehung zwischen jeder Beziehung von mehreren Beziehungen und jedem Musiktyp von mehreren Musiktypen bestimmt wird,
ein Abspielmodul (15), das dazu ausgestaltet ist, Bilder in dem Ziel-Gesichtsfotoalbum abzuspielen und Musik abzuspielen, die dem durch das zweite Bestimmungsmodul bestimmten Ziel-Musiktyp entspricht.

9. Vorrichtung nach Anspruch 8, wobei das zweite Erlangungsmodul (12) umfasst:
ein erstes Erlangungssubmodul (121), das dazu ausgestaltet ist, Fingerabdruckinformationen des Benutzers zu erlangen, und
wobei das erste Bestimmungsmodul (13) umfasst:
ein erstes Abgleichssubmodul (131), das dazu ausgestaltet ist, die von dem ersten Erlangungssubmodul erlangten Fingerabdruckinformationen mit vorher festgelegten Fingerabdruckinformationen eines ersten Benutzers abzugleichen,
ein erstes Bestimmungssubmodul (132), das dazu ausgestaltet ist, wenn die Fingerabdruckinformationen mit den Fingerabdruckinformationen des ersten Benutzers übereinstimmen, den Benutzer als den ersten Benutzer zu bestimmen und die Beziehung zwischen dem ersten Benutzer und der Person, die betrachtet wird und deren Gesicht in dem Ziel-Gesichtsfotoalbum abgebildet ist, basierend auf einem von dem ersten Benutzer für das Ziel-Gesichtsfotoalbum festgelegten Kategorieschlagwort zu bestimmen,
ein zweites Bestimmungssubmodul (133), das dazu ausgestaltet ist, wenn die Fingerabdruckinformationen nicht mit den Fingerabdruckinformationen des ersten Benutzers übereinstimmen, den Benutzer als einen zweiten Benutzer zu bestimmen und die Beziehung zwischen dem zweiten Benutzer und der Person, die betrachtet wird und deren Gesicht in dem Ziel-Gesichtsfotoalbum abgebildet ist, zu bestimmen.

10. Vorrichtung nach Anspruch 9, wobei das zweite Bestimmungssubmodul (14) umfasst:
eine erste Erlangungseinheit, die dazu ausgestaltet ist, ein Gesichtsbild des zweiten Benutzers zu erlangen,
eine Abgleichseinheit, die dazu ausgestaltet ist, das Gesichtsbild des zweiten Benutzers mit dem Gesichtsbild abzugleichen, das jedem Gesichtsfotoalbum von mehreren Gesichtsfotoalben entspricht,
eine erste Bestimmungseinheit, die dazu ausgestaltet ist, wenn es ein Gesichtsfotoalbum gibt, das mit dem Gesichtsbild des zweiten Benutzers übereinstimmt, die Beziehung zwischen dem zweiten Benutzer und der Person, die betrachtet wird, basierend auf dem Kategorieschlagwort des übereinstimmenden Gesichtsfotoalbums und dem Kategorieschlagwort des Ziel-Gesichtsfotoalbum zu bestimmen.

11. Vorrichtung nach Anspruch 8, wobei das zweite Erlangungsmodul (12) umfasst:
ein zweites Erlangungssubmodul (122), das dazu ausgestaltet ist, ein Gesichtsbild des Benutzers zu erlangen,
wobei das erste Bestimmungsmodul (13) umfasst:
ein zweites Abgleichssubmodul (134), das dazu ausgestaltet ist, das von dem zweiten Erlangungssubmodul (122) erlangte Gesichtsbild mit einem vorher festgelegten Gesichtsbild eines ersten Benutzers abzugleichen,
wobei das erste Bestimmungssubmodul (132) dazu ausgestaltet ist, wenn das Gesichtsbild mit dem Gesichtsbild des ersten Benutzers übereinstimmt, den Benutzer als den ersten Benutzer zu bestimmen und die Beziehung zwischen dem ersten Benutzer und der Person, die betrachtet wird und deren Gesicht in dem Ziel-Gesichtsfotoalbum abgebildet ist, basierend auf einem von dem ersten Benutzer für das Ziel-Gesichtsfotoalbum festgelegten Kategorieschlagwort zu bestimmen,
das zweite Bestimmungssubmodul (133) dazu ausgestaltet, wenn das Gesichtsbild nicht mit dem Gesichtsbild des ersten Benutzers übereinstimmt, den Benutzer als einen zweiten Benutzer zu bestimmen und die Beziehung zwischen dem zweiten Benutzer und der Person, die betrachtet wird und deren Gesicht in dem Ziel-Gesichtsfotoalbum abgebildet ist, zu bestimmen.

12. Vorrichtung nach Anspruch 11, wobei das zweite Bestimmungssubmodul (14) umfasst:
eine Abgleichseinheit (1331), die dazu ausgestaltet ist, das Gesichtsbild des zweiten Benutzers mit dem Gesichtsbild abzugleichen, das jedem Gesichtsfotoalbum von mehreren Gesichtsfotoalben entspricht,
eine erste Bestimmungseinheit (1332), die dazu ausgestaltet ist, wenn die Abgleichseinheit das Gesichtsbild des zweiten Benutzers mit einem Gesichtsfotoalbum abgleicht, die Beziehung zwischen dem zweiten Benutzer und der Person, die betrachtet wird, basierend auf dem Kategorieschlagwort des übereinstimmenden Gesichtsfotoalbums und dem Kategorieschlagwort des Ziel-Gesichtsfotoalbums zu bestimmen.

13. Vorrichtung nach Anspruch 10 oder 12, wobei die erste Bestimmungseinheit (1332) umfasst:
eine erste Bestimmungskomponente (13321), die dazu ausgestaltet ist, die Beziehung zwischen dem ersten Benutzer und dem zweiten Benutzer basierend auf dem Kategorieschlagwort des übereinstimmenden Gesichtsfotoalbums zu bestimmen,
eine zweite Bestimmungskomponente (13322), die dazu ausgestaltet ist, die Beziehung zwischen dem zweiten Benutzer und der Person, die betrachtet wird, basierend auf der Beziehung zwischen dem ersten Benutzer und der Person, die betrachtet wird, welche durch das erste Bestimmungssubmodul (132) bestimmt wird, und der Beziehung zwischen dem ersten Benutzer und dem zweiten Benutzer, welche durch die erste Bestimmungskomponente (13321) bestimmt wird, zu bestimmen.

14. Vorrichtung nach Anspruch 10 oder 12, wobei das zweite Bestimmungssubmodul (133) ferner umfasst:
eine zweite Erlangungseinheit, die dazu ausgestaltet ist, wenn die Abgleichseinheit das Gesichtsbild des zweiten Benutzers nicht mit einem Gesichtsfotoalbum abgleichen kann, Merkmale des zweiten Benutzers zu erlangen,
eine zweite Bestimmungseinheit, die dazu ausgestaltet ist, die Beziehung zwischen dem zweiten Benutzer und der Person, die betrachtet wird, basierend auf den von der zweiten Erlangungseinheit erlangten Merkmalen und die Beziehung zwischen dem ersten Benutzer und der Person, die betrachtet wird, welche durch das erste Bestimmungssubmodul bestimmt wird, zu bestimmen, wobei die Merkmale Altersgruppeninformationen und/oder Geschlechtsinformationen umfassen.

15. Computerprogramm, das Anweisungen zum Ausführen des Schritts eines Verfahrens nach einem der Ansprüche 1 bis 7 beinhaltet, wenn das Programm von einem Computer ausgeführt wird.

## Revendications

1. Procédé exécuté par un appareil pour lire de la musique sur la base d'un album photos de visage cible dans un dispositif terminal, **caractérisé en ce qu'**il comprend :
l'acquisition, à partir d'un premier module d'acquisition (11), d'une instruction de visualisation déclenchée par un utilisateur, afin de visualiser des photos dans l'album photos de visage cible, dans lequel l'instruction de visualisation est déclenchée par la sélection par l'utilisateur de l'album photos de visage cible ;
l'acquisition, à partir d'un deuxième module d'acquisition (12), de caractéristiques de l'utilisateur, afin de déterminer si l'utilisateur est un premier utilisateur ou un deuxième utilisateur, sur la base des caractéristiques acquises, dans lequel les caractéristiques de l'utilisateur comportent une empreinte digitale ou une image faciale de l'utilisateur ;
la détermination d'une relation entre l'utilisateur et une personne visualisée dont le visage est représenté dans l'album photos de visage cible, en utilisant un premier module de détermination (13), dans lequel
la relation entre l'utilisateur et la personne visualisée dont le visage est représenté dans l'album photos de visage cible est déterminée sur la base d'une étiquette de catégorie définie par l'utilisateur pour l'album photos de visage cible, si l'utilisateur est déterminé en tant que premier utilisateur ; et
la relation entre l'utilisateur et la personne visualisée dont le visage est représenté dans l'album photos de visage cible est déterminée sur la base de l'étiquette de catégorie définie par le premier utilisateur pour l'album photos de visage cible et d'une étiquette de catégorie définie par le premier utilisateur pour un album photos de visage qui concorde avec une image faciale du deuxième utilisateur, si l'utilisateur est déterminé en tant que deuxième utilisateur ;
la détermination d'un type de musique cible correspondant à la relation, sur la base d'une relation de correspondance prédéfinie entre chaque relation d'une pluralité de relations et chaque type de musique d'une pluralité de types de musique, en utilisant un deuxième module de détermination (14) ;
la lecture des photos dans l'album photos de visage cible et la lecture d'une musique correspondant au type de musique cible, en utilisant un module de lecture (15).

2. Procédé selon la revendication 1, dans lequel l'acquisition (102) des caractéristiques de l'utilisateur comprend :
l'acquisition d'informations d'empreintes digitales de l'utilisateur ; et
dans lequel la détermination (103) de la relation entre l'utilisateur et la personne visualisée dont le visage est représenté dans l'album photos de visage cible comprend :
la recherche d'une concordance entre les informations d'empreintes digitales et des informations d'empreintes digitales prédéfinies d'un premier utilisateur ;
si les informations d'empreintes digitales concordent avec les informations d'empreintes digitales du premier utilisateur, la détermination de l'utilisateur en tant que premier utilisateur, et la détermination de la relation entre le premier utilisateur et la personne visualisée dont le visage est représenté dans l'album photos de visage cible, sur la base d'une étiquette de catégorie définie par le premier utilisateur pour l'album photos de visage cible ;
si les informations d'empreintes digitales ne concordent pas avec les informations d'empreintes digitales du premier utilisateur, la détermination de l'utilisateur en tant que deuxième utilisateur, et la détermination de la relation entre le deuxième utilisateur et la personne visualisée dont le visage est représenté dans l'album photos de visage cible.

3. Procédé selon la revendication 2, dans lequel la détermination de l'utilisateur en tant que deuxième utilisateur et la détermination de la relation entre le deuxième utilisateur et la personne visualisée dont le visage est représenté dans l'album photos de visage cible comprend :
l'acquisition d'une image faciale du deuxième utilisateur ;
la recherche d'une concordance entre l'image faciale du deuxième utilisateur et des images faciales correspondant à chaque album photos de visage d'une pluralité d'albums photos de visages ;
s'il existe un album photos de visage qui concorde avec l'image faciale du deuxième utilisateur, la détermination de la relation entre le deuxième utilisateur et la personne visualisée, sur la base de l'étiquette de catégorie de l'album photos de visage concordant et de l'étiquette de catégorie de l'album photos de face cible.

4. Procédé selon la revendication 1, dans lequel l'acquisition (102, 202) des caractéristiques de l'utilisateur comprend :
l'acquisition d'une image faciale de l'utilisateur (202) ; et
dans lequel la détermination de la relation entre l'utilisateur et la personne visualisée dont le visage est représenté dans l'album photos de visage cible comprend :
la recherche d'une concordance (203) entre l'image faciale et une image faciale prédéfinie d'un premier utilisateur ;
si l'image faciale concorde avec l'image faciale du premier utilisateur, la détermination de l'utilisateur en tant que premier utilisateur, et la détermination de la relation entre le premier utilisateur et la personne visualisée dont le visage est représenté dans l'album photos de visage cible, sur la base d'une étiquette de catégorie définie par le premier utilisateur pour l'album photos de visage cible ;
si l'image faciale ne concorde pas avec l'image faciale du premier utilisateur, la détermination de l'utilisateur en tant que deuxième utilisateur, et la détermination de la relation entre le deuxième utilisateur et la personne visualisée dont le visage est représenté dans l'album photos de visage cible.

5. Procédé selon la revendication 4, dans lequel la détermination de la relation entre le deuxième utilisateur et la personne visualisée dont le visage est représenté dans l'album photos de visage cible comprend :
la recherche d'une concordance (301) entre l'image faciale du deuxième utilisateur et des images faciales correspondant à chaque album photos de visage d'une pluralité d'albums photos de visages ;
s'il existe un album photos de visage qui concorde avec l'image faciale du deuxième utilisateur, la détermination (302) de la relation entre le deuxième utilisateur et la personne visualisée, sur la base de l'étiquette de catégorie de l'album photos de visage concordant et de l'étiquette de catégorie de l'album photos de visage cible.

6. Procédé selon la revendication 3 ou 5, dans lequel la détermination (302) de la relation entre le deuxième utilisateur et la personne visualisée sur la base de l'étiquette de catégorie de l'album photos de visage concordant et de l'étiquette de catégorie de l'album photos de visage cible comprend :
la détermination de la relation entre le premier utilisateur et le deuxième utilisateur, sur la base de l'étiquette de catégorie de l'album photos de visage concordant ;
la détermination de la relation entre le deuxième utilisateur et la personne visualisée, sur la base de la relation entre le premier utilisateur et la personne visualisée, et de la relation entre le premier utilisateur et le deuxième utilisateur.

7. Procédé selon la revendication 3 ou 5, comprenant en outre :
s'il n'existe aucun album photos de visage qui concorde avec l'image faciale du deuxième utilisateur, l'acquisition (401) de caractéristiques du deuxième utilisateur ;
la détermination (402) de la relation entre le deuxième utilisateur et la personne visualisée, sur la base des caractéristiques du deuxième utilisateur, et de la relation entre le premier utilisateur et la personne visualisée, les caractéristiques comprenant des informations de groupes d'âges et/ou des information sur le genre.

8. Appareil pour lire de la musique sur la base d'un album photos de visage cible, **caractérisé en ce qu'**il comprend :
un premier module d'acquisition (11) configuré pour acquérir une instruction de visualisation déclenchée par un utilisateur, afin de visualiser des photos dans l'album photos de visage cible, dans lequel l'instruction de visualisation est déclenchée par la sélection par l'utilisateur de l'album photos de visage cible ;
un deuxième module d'acquisition (12) configuré pour acquérir des caractéristiques de l'utilisateur, afin de déterminer si l'utilisateur est un premier utilisateur ou un deuxième utilisateur, sur la base des caractéristiques acquises, dans lequel les caractéristiques de l'utilisateur comportent une empreinte digitale ou une image faciale de l'utilisateur ;
un premier module de détermination (13) configuré pour déterminer une relation entre l'utilisateur et une personne visualisée dont le visage est représenté dans l'album photos de visage cible, dans lequel
la relation entre l'utilisateur et la personne visualisée dont le visage est représenté dans l'album photos de visage cible est déterminée sur la base d'une étiquette de catégorie définie par l'utilisateur pour l'album photos de visage cible, si l'utilisateur est déterminé en tant que premier utilisateur ; et
la relation entre l'utilisateur et la personne visualisée dont le visage est représenté dans l'album photos de visage cible est déterminée sur la base de l'étiquette de catégorie définie par le premier utilisateur pour l'album photos de visage cible et d'une étiquette de catégorie définie par le premier utilisateur pour un album photos de visage qui concorde avec une image faciale du deuxième utilisateur, si l'utilisateur est déterminé en tant que deuxième utilisateur ;
un deuxième module de détermination (14) configuré pour déterminer un type de musique cible correspondant à la relation déterminée par le premier module de détermination, sur la base d'une relation de correspondance prédéfinie entre chaque relation d'une pluralité de relations et chaque type de musique d'une pluralité de types de musique ;
un module de lecture (15) configuré pour lire des photos dans l'album photos de visage cible et pour lire une musique correspondant au type de musique cible déterminé par le deuxième module de détermination.

9. Appareil selon la revendication 8, dans lequel le deuxième module d'acquisition (12) comprend :
un premier sous-module d'acquisition (121) configuré pour acquérir des informations d'empreintes digitales de l'utilisateur ; et
dans lequel le premier module de détermination (13) comprend :
un premier sous-module de recherche de concordance (131) configuré pour chercher une concordance entre les informations d'empreintes digitales acquises par le premier sous-module d'acquisition et des informations d'empreintes digitales prédéfinies d'un premier utilisateur ;
un premier sous-module de détermination (132) configuré pour, si les informations d'empreintes digitales concordent avec les informations d'empreintes digitales du premier utilisateur, déterminer l'utilisateur en tant que premier utilisateur, et déterminer la relation entre le premier utilisateur et la personne visualisée dont le visage est représenté dans l'album photos de visage cible, sur la base d'une étiquette de catégorie définie par le premier utilisateur pour l'album photos de visage cible ;
un deuxième sous-module de détermination (133) configuré pour, si les informations d'empreintes digitales ne concordent pas avec les informations d'empreintes digitales du premier utilisateur, déterminer l'utilisateur en tant que deuxième utilisateur, et déterminer la relation entre le deuxième utilisateur et la personne visualisée dont le visage est représenté dans l'album photos de visage cible.

10. Appareil selon la revendication 9, dans lequel le deuxième sous-module de détermination (14) comprend :
une première unité d'acquisition configurée pour acquérir une image faciale du deuxième utilisateur ;
une unité de recherche de concordance configurée pour chercher une concordance entre l'image faciale du deuxième utilisateur et l'image faciale correspondant à chaque album photos de visage d'une pluralité d'albums photos de visages ;
une première unité de détermination configurée pour, s'il existe un album photos de visage qui concorde avec l'image faciale du deuxième utilisateur, déterminer la relation entre le deuxième utilisateur et la personne visualisée, sur la base de l'étiquette de catégorie de l'album photos de visage concordant et de l'étiquette de catégorie de l'album photos de visage cible.

11. Appareil selon la revendication 8, dans lequel le deuxième module d'acquisition (12) comprend :
un deuxième sous-module d'acquisition (122) configuré pour acquérir une image faciale de l'utilisateur ;
le premier module de détermination (13) comprend :
un deuxième sous-module de recherche de concordance (134) configuré pour chercher une concordance entre l'image faciale acquise par le deuxième sous-module d'acquisition (122) et une image faciale prédéfinie d'un premier utilisateur ;
le premier sous-module de détermination (132) est configuré pour, si l'image faciale concorde avec l'image faciale du premier utilisateur, déterminer l'utilisateur en tant que premier utilisateur, et déterminer la relation entre le premier utilisateur et la personne visualisée dont le visage est représenté dans l'album photos de visage cible, sur la base d'une étiquette de catégorie définie par le premier utilisateur pour l'album photos de face cible ;
le deuxième sous-module de détermination (133) est configuré pour, si l'image faciale ne concorde pas avec l'image faciale du premier utilisateur, déterminer l'utilisateur en tant que deuxième utilisateur, et déterminer la relation entre le deuxième utilisateur et la personne visualisée dont le visage est représenté dans l'album photos de visage cible.

12. Appareil selon la revendication 11, dans lequel le deuxième sous-module de détermination (14) comprend :
une unité de recherche de concordance (1331) configurée pour chercher une concordance entre l'image faciale du deuxième utilisateur et l'image faciale correspondant à chaque album photos de visage d'une pluralité d'albums photos de visages ;
une première unité de détermination (1332) configurée pour, si l'unité de recherche de concordance établit une concordance entre l'image faciale du deuxième utilisateur et un album photos de visage, déterminer la relation entre le deuxième utilisateur et la personne visualisée, sur la base de l'étiquette de catégorie de l'album photos de visage concordant et de l'étiquette de catégorie de l'album photos de visage cible.

13. Appareil selon la revendication 10 ou 12, dans lequel la première unité de détermination (1332) comprend :
un premier composant de détermination (13321) configuré pour déterminer la relation entre le premier utilisateur et le deuxième utilisateur, sur la base de l'étiquette de catégorie de l'album photos de visage concordant ;
un deuxième composant de détermination (13322) configuré pour déterminer la relation entre le deuxième utilisateur et la personne visualisée, sur la base de la relation entre le premier utilisateur et la personne visualisée déterminée par le premier sous-module de détermination (132), et de la relation entre le premier utilisateur et le deuxième utilisateur déterminée par le premier composant de détermination (13321).

14. Appareil selon la revendication 10 ou 12, dans lequel le deuxième sous-module de détermination (133) comprend en outre :
une deuxième unité d'acquisition configurée pour, si l'unité de recherche de concordance ne réussit pas à établir une concordance entre l'image faciale du deuxième utilisateur et un album photos de visage, acquérir des caractéristiques du deuxième utilisateur ;
une deuxième unité de détermination configurée pour déterminer la relation entre le deuxième utilisateur et la personne visualisée, sur la base des caractéristiques acquises par la deuxième unité d'acquisition, et de la relation entre le premier utilisateur et la personne visualisée déterminée par le premier sous-module de détermination, les caractéristiques comprenant des informations de groupes d'âges et/ou des information sur le genre.

15. Programme informatique comportant des instructions pour exécuter l'étape d'un procédé selon l'une quelconque des revendications 1 à 7 lorsque ledit programme est exécuté par un ordinateur.
